# EUROPEAN PATENT SPECIFICATION

(11) **EP 2 343 613 B1**
(45) Date of publication and mention of the grant of the patent: **08.11.2017**
(21) Application number: 10176344.9
(22) Date of filing: 13.09.2010
(51) Int. Cl.: G05D 1/00, B64C 13/50, B64C 13/42

(54) **Flight control system**
Flugsteuerungssystem
Système de contrôle de vol

(30) Priority: 12.01.2010 JP 2010004026
(43) Date of publication of application: 13.07.2011
(73) Proprietor: Nabtesco Corporation, Tokyo 105-0022 (JP)
(72) Inventor: Nakagawa, Shingo, Gifu-ken 503-2192 (JP); Kojima, Satoru, Gifu-ken 503-2192 (JP)
(74) Representative: Pautex Schneider, Nicole Véronique

(56) References cited:
- EP-A2- 2 012 212
- WO-A2-2008/122820
- US-A1- 2002 116 096
- US-A1- 2003 120 399
- US-A1- 2006 171 329
- US-A1- 2006 198 737
- US-A1- 2006 214 066
- US-A1- 2007 164 166
- US-A1- 2007 233 330

## Description

### BACKGROUND OF THE INVENTION

### 1. Technical Field

The present invention generally relates to aircraft flight control systems and, in particular, to a fight control system that can flexibly switch to backup control systems.

### 2. Description of Prior Art

As for a flight control system for an aircraft, there is known a fly-by-wire (FBW) system composed of a pilot command system (PCS) generating and outputting a pilot control signal based on operations of a control stick and the like by a pilot, a flight control computer (FCC) comprehensively controlling engines, flight control surfaces and other auxiliaries of the aircraft based on the pilot control signal, actuator control electronics (ACE) executing servo calculation process based on a surface control signal transmitted from the FCC and outputting an actuator operation signal, and an actuator section for driving the corresponding flight control surface based on the actuator operation signal. Here, the flight control surface or flight control surfaces are intended to mean all flight control surfaces equipped to the aircraft which includes such as rudders, ailerons, flaps, leading edge slats, spoilers, horizontal stabilizers, and elevators.

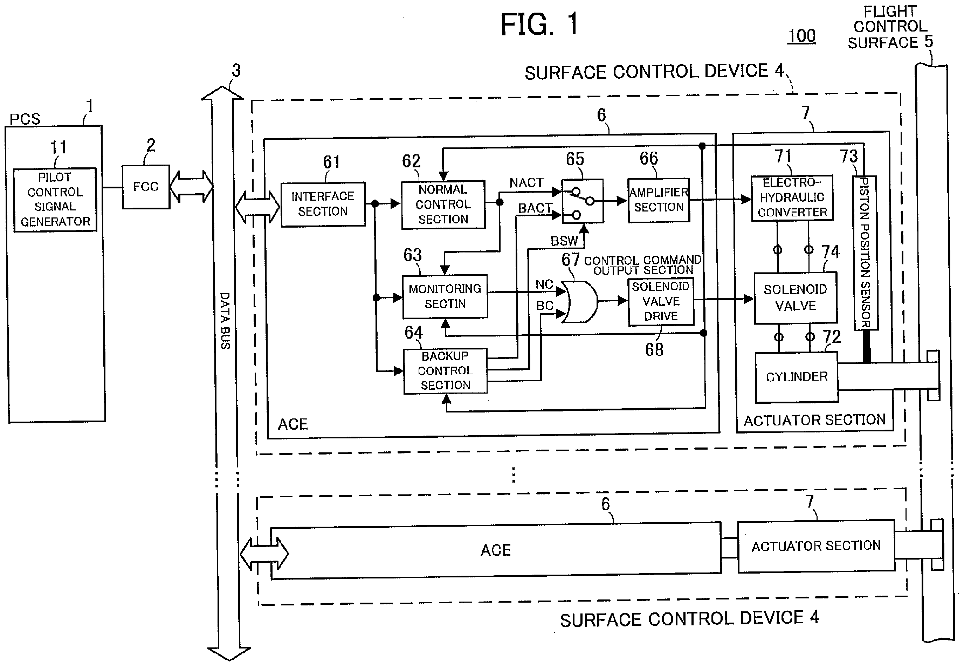

The ACE that outputs the actuator operation signal indicative of control operation of the flight control surface, in particular, is required to be highly reliable. It is also desirable that the flight control surfaces can be controlled, even in the event that a random failure or a generic failure occurs to the ACE. The inventors of the present invention have already proposed an ACE comprising a normal control section (primary control unit) and a monitoring section utilizing a large scale programmable device and a backup control section (backup control unit) utilizing a small scale programmable device (refer to, for example, paragraph 0058 and FIG. 1 in US publication No. 2006/0198737). With this ACE, when it is judged by the monitoring section that the operation of a normal control system is not normal, the supply of hydraulic oil to an actuator section (cylinder actuator) is suspended and then the FCC newly issues a command to resume the supply of hydraulic oil, whereby the control of the flight control surface by a backup control system is enabled. However, when a failure occurs to the monitoring section or the FCC, for example, the monitoring section failed to detect abnormality of the normal control system, or the FCC failed to produce a switching command to switch operations to the backup control system, there has been a case where switching to the backup control section is hindered.

### SUMMARY OF THE INVENTION

### Problems to be Solved by the Invention

In view of the problems described above, an object of the present invention is to provide a flight control system that promptly enables a backup operation to be reinstated even when a failure occurs to an FCC or an ACE.

### Means for Solving the Problems

A flight control system for an aircraft, according to an aspect of the present invention, includes a pilot command system (PCS) including a pilot control signal generator outputting control operations of a pilot as a pilot control signal, a flight control computer (FCC) outputting a surface control signal based on the pilot control signal and a sensor signal output from a sensor equipped on the aircraft, a surface control device for controlling a flight control surface of the aircraft, one or more of the surface control devices being arranged for a single piece of the flight control surface, and a data bus for electrically connecting the FCC with the surface control device, in which the surface control device includes actuator control electronics (ACE) outputting an actuator operation signal based on the surface control signal, and an actuator section for driving the flight control surface in response to the actuator operation signal; the ACE includes an interface section for communicating data with the FCC via the data bus, a normal control section generating a normal actuator operation signal for controlling the flight control surface based on the surface control signal transmitted from the FCC via the interface section, a monitoring section for monitoring whether or not operations of the normal control section and the actuator section are normal and outputting a normal control command when it is judged that the operations of the normal control section and the actuator section are normal, a backup control section generating a backup actuator operation signal for controlling the flight control surface in lieu of the normal control section, a switching section for switching between the normal actuator operation signal and the backup actuator operation signal in response to a backup control switching command, an amplifier section for amplifying and outputting one of the normal actuator operation signal and the backup actuator operation signal switched by the switching section as the actuator operation signal, and a control command output section outputting a control command that is a logical addition of the normal control command and a backup control command; the actuator section includes an electro-hydraulic converter for controlling flow amount of hydraulic oil in response to the actuator operation signal, a cylinder for driving the flight control surface by flow amount of the hydraulic oil controlled by the electro-hydraulic converter, and a solenoid valve for permitting the hydraulic oil to flow into the cylinder when the control command is being output and for blocking the hydraulic oil to flow into the cylinder when the control command is not being output; and the FCC outputs the backup control command and the backup control switching command when it is judged by the FCC based on monitoring results transmitted from the monitoring section that the operation of the normal control section is abnormal.

According to the present invention thus configured, switching to the backup control section can be effected by the backup control command and the backup control switching command output from the FCC.

In the flight control system above, according to the present invention, the PCS may further include a backup control signal generator outputting control operations of the pilot as a backup control signal, and a backup command generator generating the backup control command and the backup control switching command in response to operations of the pilot in lieu of the FCC, in which the backup control command and the backup control switching command may be fed into the backup control section through the FCC, the data bus and the interface section, and the backup control signal may be fed into the backup control section directly.

According to the present invention thus configured, switching to the backup control section can be effected by the backup control command and the backup control switching command output from the FCC and a backup control operation can be carried out through the PCS and the backup control section.

In the flight control system above, according to the present invention, the PCS may further include a backup control signal generator outputting control operations of the pilot as a backup control signal, and a backup command generator generating the backup control command and the backup control switching command in response to operations of the pilot in lieu of the FCC, in which the backup control command and the backup control switching command may be fed into the backup control section directly, and the backup control signal may be fed into the backup control section through the FCC, the data bus and the interface section.

According to the present invention thus configured, switching to the backup control section can be effected by the backup control command and the backup control switching command output from the PCS and a backup control operation can be carried out by the backup control signal through the FCC.

In the flight control system above, according to the present invention, the PCS may further include a backup control signal generator outputting control operations of the pilot as a backup control signal, and a backup command generator generating the backup control command and the backup control switching command in response to operations of the pilot in lieu of the FCC, in which the backup control command and the backup control switching command may be fed into the backup control section directly, and the backup control signal may be fed into the backup control section directly.

According to the present invention thus configured, switching to the backup control section can be effected by the backup control command and the backup control switching command output from the PCS and a backup control operation can be carried out by the backup control signal that is also output from the PCS.

A flight control system for an aircraft, according to another aspect of the present invention, includes a pilot command system (PCS) including a pilot control signal generator outputting control operations of a pilot as a pilot control signal, a flight control computer (FCC) outputting a surface control signal based on the pilot control signal and a sensor signal output from a sensor equipped on the aircraft, a surface control device for controlling a flight control surface of the aircraft, one or more of the surface control devices being arranged for a single piece of the flight control surface, and a data bus for electrically connecting the FCC with the surface control device, in which the surface control device includes actuator control electronics (ACE) outputting an actuator operation signal based on the surface control signal, and an actuator section for driving the flight control surface in response to the actuator operation signal; the ACE includes an interface section for communicating data with the FCC via the data bus, a normal control section generating a normal actuator operation signal for controlling the flight control surface based on the surface control signal transmitted from the FCC via the interface section, a monitoring section for monitoring whether or not operations of the normal control section and the actuator section are normal and outputting a normal control command when it is judged that the operations of the normal control section and the actuator section are normal, a backup control section generating a backup actuator operation signal for controlling the flight control surface in lieu of the normal control section, a switching section for switching between the normal actuator operation signal and the backup actuator operation signal in response to a backup control switching command, a servo calculator for carrying out servo calculation based on the normal actuator operation signal and the backup actuator operation signal switched by the switching section and outputting calculation results as the actuator operation signal, and a control command output section outputting a control command that is a logical addition of the normal control command and a backup control command; the actuator section includes an electro-hydraulic converter for controlling flow amount of hydraulic oil in response to the actuator operation signal, a cylinder for driving the flight control surface by flow amount of the hydraulic oil controlled by the electro-hydraulic converter, and a solenoid valve for permitting the hydraulic oil to flow into the cylinder when the control command is being output and for blocking the hydraulic oil to flow into the cylinder when the control command is not being output; and the FCC outputs the backup control command and the backup control switching command when it is judged by the FCC based on monitoring results transmitted from the monitoring section that the operation of the normal control section is abnormal.

According to the present invention thus configured, switching to the backup control section can be effected by the backup control command and the backup control switching command output from the FCC.

In the flight control system above, according to the present invention, the PCS may further include a backup control signal generator outputting control operations of the pilot as a backup control signal, and a backup command generator generating the backup control command and the backup control switching command in response to operations of the pilot in lieu of the FCC, in which the backup control command and the backup control switching command may be fed into the backup control section through the FCC, the data bus and the interface section, and the backup control signal may be fed into the backup control section directly.

According to the present invention thus configured, switching to the backup control section can be effected by the backup control command and the backup control switching command output from the FCC and a backup control operation can be carried out through the PCS and the backup control section.

In the flight control system above, according to the present invention, the PCS may further include a backup control signal generator outputting control operations of the pilot as a backup control signal, and a backup command generator generating the backup control command and the backup control switching command in response to operations of the pilot in lieu of the FCC, in which the backup control command and the backup control switching command may be fed into the backup control section directly, and the backup control signal may be fed into the backup control section through the FCC, the data bus and the interface section.

According to the present invention thus configured, switching to the backup control section can be effected by the backup control command and the backup control switching command output from the PCS and a backup control operation can be carried out by the backup control signal through the FCC.

In the flight control system above, according to the present invention, the PCS may further include a backup control signal generator outputting control operations of the pilot as a backup control signal, and a backup command generator generating the backup control command and the backup control switching command in response to operations of the pilot in lieu of the FCC, in which the backup control command and the backup control switching command may be fed into the backup control section directly, and the backup control signal may be fed into the backup control section directly.

According to the present invention thus configured, switching to the backup control section can be effected by the backup control command and the backup control switching command output from the PCS and a backup control operation can be carried out by the backup control signal that is also output from the PCS.

In the flight control system above, according to yet another aspect of the present invention, the normal control section may be composed of a first programmable logic device for executing a normal control program, the monitoring section may be composed of a second programmable logic device for executing a monitoring program including a predetermined portion of the normal control program, and the backup control section may be composed of a third programmable logic device for executing a backup control program having a hardware configuration different from those of the first programmable logic device and the second programmable logic device.

According to the present invention thus configured, it can prevent a generic failure from occurring both in the normal control section and the monitoring section and in the backup control section.

In the flight control system above, according to still another aspect of the present invention, the first programmable logic device and the second programmable logic device may be field programmable gate arrays (FPGA) having a maximum gate size of 300,000 to 1,000,000 gates, and the third programmable logic device may be a complex programmable logic device (CPLD) having a maximum gate size of 100,000 gates.

According to the present invention thus configured, the failure rate of the backup control section can be made lower than those of the normal control section and the monitoring section.

### Effects of the Invention

In the flight control system according to the present invention, switching to the backup control systems can be flexibly handled even when a failure occurs to the normal control system.

### BRIEF EXPLANATION OF THE DRAWINGS

FIG. 1 is a block diagram of a flight control system according to a first embodiment of the present invention;
FIG. 2 is a block diagram of a flight control system according to a second embodiment of the present invention;
FIG. 3 is a block diagram of a flight control system according to a third embodiment of the present invention;
FIG. 4 is a block diagram of a flight control system according to a fourth embodiment of the present invention;
FIG. 5 is a block diagram of a flight control system according to a fifth embodiment of the present invention;
FIG. 6 is a block diagram of a flight control system according to a sixth embodiment of the present invention;
FIG. 7 is a block diagram of a flight control system according to a seventh embodiment of the present invention;
FIG. 8 is a block diagram of a flight control system according to an eighth embodiment of the present invention; and
FIG. 9 is a block diagram of a flight control system according to a modified version of the eighth embodiment.

### DESCRIPTION OF THE PREFERRED EMBODIMENTS

### First Embodiment

First, the configuration of a flight control system for an aircraft according to a first embodiment of the present invention will be described. FIG. 1 is a block diagram schematically showing a flight control system 100 according to the first embodiment. The flight control system 100 for controlling the flight of an aircraft is composed of a pilot command system (PCS) 1 that includes a pilot control signal generator 11 generating and outputting a pilot control signal based on the operations of a control stick and the like by a pilot, a flight control computer (FCC) 2 that comprehensively controls engines, each of flight control surfaces 5 and other auxiliaries of the aircraft with signals including a surface control signal based on the pilot control signal, a surface control device 4 arranged for each of the flight control surfaces 5 for controlling each flight control surface 5 based on the surface control signal output from the FCC 2, and a data bus 3 for connecting the FCC 2 with the surface control device 4. Here, the flight control surface or flight control surfaces are intended to mean all flight control surfaces equipped to the aircraft which includes such as rudders, ailerons, flaps, leading edge slats, spoilers, horizontal stabilizers, and elevators.

The surface control device 4 includes actuator control electronics (ACE) 6 for executing servo calculating process and outputting an actuator operation signal based on the surface control signal transmitted from the FCC 2 via the data bus 3, and an actuator section 7 for controlling hydraulic pressure oil supplied to a hydraulic cylinder 72 based on the actuator operation signal. Generally, a plurality of surface control devices 4 are coupled with a single piece of the flight control surface 5. In other words, the single piece of the flight control surface 5 is configured to be controlled by a plurality of ACE 6 and actuator section 7 pairs. The ACE 6 includes such as an interface section 61, a normal control section 62, a monitoring section 63, and a backup control section 64.

For the normal control section 62 and the monitoring section 63, a large scale programmable logic device (PLD) such as a field programmable gate array (FPGA) having a gate size exceeding 10,000 gates up to 300,000 to 1,000,000 gates or more is used. On the other hand, for the backup control section 64, a smaller PLD such as a complex programmable logic device (CPLD) having a gate size of less than 10,000 gates is used. In view of the probability of occurrence of abnormal elements, assuming that it is simply proportionate to the number of gates, it is more advantageous to use a CPLD having a lesser number of gates than an FPGA. In terms of verifying program logics, it is also easier to sufficiently verify a CPLD of lesser gates compared to an FPGA having more gates. Accordingly, the backup control section 64 is composed of a CPLD by reducing its function to a bare minimum required. Incidentally, in one of the embodiments of the present invention, the FPGA used has a gate size of about 260,000 gates and the CPLD used has a gate size of about 7,000 gates. Further, by making their programs different for the normal control section 62 and the monitoring section 63 and for the backup control section 64 based on separate algorithm, it can reduce the possibilities of similar failures occurring to these devices under similar conditions due to flaws in the programs, i.e. bug. By making components used for each section different, it can further prevent similar failures from occurring under similar conditions.

In the ACE 6, besides the interface section 61, the normal control section 62, the monitoring section 63, and the backup control section 64, included are a switching section 65, an amplifier section 66, a control command output section 67, and a solenoid valve driver 68. The switching section 65, the amplifier section 66, the control command output section 67, and the solenoid valve driver 68 are all composed of discrete components. The actuator section 7 includes an electro-hydraulic converter 71 for converting an electrical signal into a hydraulic pressure, a cylinder 72 including a piston, a position sensor 73, and a solenoid valve 74 including a solenoid. The output from the position sensor 73, i.e. a piston position signal, is connected to the normal control section 62, the monitoring section 63, and the backup control section 64 in the ACE 6.

Next, the function of each section will be described. The PCS 1, in the pilot control signal generator 11, generates the pilot control signal in response to the signals from the control stick and various control switches operated by the pilot and outputs the signal to the FCC 2. The FCC 2 outputs comprehensive control signals, including the surface control signal, for the engines, each of the flight control surfaces 5, and other auxiliaries based on the pilot control signal transmitted from the PCS 1 and signals from various sensors indicative of conditions of the aircraft. The surface control signal is transmitted to the ACE 6 via the data bus 3.

The interface section 61 in the ACE 6 distributes the surface control signal transmitted from the FCC 2 via the data bus 3 to each of the normal control section 62, the monitoring section 63 and the backup control section 64, and also transmits monitoring results of the monitoring section 63 to the FCC 2 via the data bus 3.

The normal control section 62, by executing a preinstalled normal control program, carries out a so-called servo calculation based on the surface control signal transmitted from the FCC 2 via the data bus 3 and the piston position signal output from the piston position sensor 73 and outputs a normal actuator operation signal (NACT signal) that is the resultant of the calculation to the switching section 65 and the monitoring section 63.

The monitoring section 63, by executing a preinstalled monitoring program, carries out servo calculation in a similar manner to that of the normal control section 62 to calculate a monitor actuator operation signal (MACT signal). The monitoring section 63, by executing the monitoring program, further monitors whether or not the MACT signal and the NACT signal calculated by the normal control section 62 agree with each other within a predetermined range. When they agree, it is judged by the monitoring section 63 that the operation of the normal control section 62 is normal and, when they do not agree, it is judged that the operation of the normal control section 62 is abnormal. Furthermore, the monitoring section 63, by executing the monitoring program, monitors whether or not the MACT signal and the piston position signal output from the piston position sensor 73 agree with each other within a predetermined range. When they agree, it is judged that the operation of the actuator section 7 is normal and, when they do not agree, it is judged that the operation of the actuator section 7 is abnormal.

In the comparison between the MACT signal and the NACT signal or between the MACT signal and the piston position signal, it may be carried out either in an analog domain or in a digital domain. In this case, when one of the signals differs in signal format from the other, it is necessary to match the signal format of both signals to be compared using an A/D converter or a D/A converter appropriately.

When it is judged by the monitoring section 63 that the operation of the normal control section 62 is normal and the operation of the actuator section 7 is normal, the monitoring section 63 sets a normal control command (NC command) to 'on'. When it is judged by the monitoring section 63 that the operation of either one of or the both of the normal control section 62 and the actuator section 7 is not normal, the monitoring section 63 sets the NC command to 'off'. Further, the monitoring section 63 outputs a normal control section monitoring result indicative of whether or not the operation of the normal control 62 is normal and an actuator section monitoring result indicative of whether or not the operation of the actuator section 7 is normal, and transmits these monitoring results to the FCC 2 through the interface section 61 and the data bus 3.

The backup control section 64, by executing a preinstalled backup control program, carries out a so-called servo calculation based on the surface control signal transmitted from the FCC 2 via the data bus 3 and the piston position signal output from the piston position sensor 73 and outputs to the switching section 65 a backup actuator operation signal (BACT signal) that is the resultant of the calculation. Further, the backup control section 64 converts a backup control switching command (BSW command) and a backup control command (BC command) which are transmitted from the FCC 2 via the data bus 3 and outputs them in their appropriate signal formats.

The switching section 65 selects either one of the NACT signal output from the normal control section 62 or the BACT signal output from the backup control section 64 based on the BSW command output from the backup control section 64 and feeds the selected signal to the amplifier section 66.

The amplifier section 66 amplifies the power of one of the NACT signal or the BACT signal selected by the switching section 65 and supplies the amplified signal as the actuator operation signal to the electro-hydraulic converter 71 in the actuator section 7.

The control command output section 67 calculates logical addition, i.e. logical OR, of the NC command output from the monitoring section 63 and fed to a first input terminal of the control command output section 67 and the BC command output from the backup control section 64 and fed to a second input terminal of the control command output section 67, and outputs the resultant as a control command to the solenoid valve driver 68. More specifically, when at least one of the NC command or the BC command is 'on', the control command output section 67 sets the output, i.e. the control command, to 'on'.

The solenoid valve driver 68 controls the solenoid of the solenoid valve 74 in the actuator section 7 to be in an excited state or in a non-excited state based on the control command output from the control command output section 67.

The electro-hydraulic converter 71 in the actuator section 7 controls the amount of hydraulic oil flowing into the cylinder 72 from a hydraulic source, not shown, based on the actuator operation signal output from the amplifier section 66 in the ACE 6. The piston in the cylinder 72 moves according to the flow-in amount of hydraulic pressure oil controlled by the electro-hydraulic converter 71 and drives the flight control surface 5 to a predetermined angle. The piston position sensor 73 in the actuator section 7 is a linear variable differential transformer (LVDT), for example, and detects the position of the piston in the cylinder 72. The detected signal is fed back as the piston position signal to the normal control section 62, the monitoring section 63, and the backup control section 64. The piston position signal is proportional to the position of the piston, in other words, the actual position (or angle) of the flight control surface 5.

In the solenoid valve 74, when the solenoid valve 74 is in the excited state, the solenoid inside is excited and a flow passage of the hydraulic oil controlled by the electro-hydraulic converter 71 to a drain formed therein is held in a closed state and a flow passage of the hydraulic oil controlled by the electro-hydraulic converter 71 to the cylinder formed therein is held in communication so that the hydraulic pressure oil is allowed to flow into the cylinder 72. On the other hand, when the solenoid valve 74 is in the non-excited state, the flow passage of the hydraulic oil controlled by the electro-hydraulic converter 71 to the drain is held in an open state to let the hydraulic oil flow out to the drain directly so that the flight control surface 5 is not driven by the piston.

Now, the operations of overall system will be described.

### A. Normal Control Operation

In the monitoring section 63, when it is judged by the monitoring section 63 that the operation of the normal control section 62 is normal and the operation of the actuator section 7 is normal, the NC command output from the monitoring section 63 is set to 'on' and thus the control command output from the control command output section 67 becomes 'on', thereby holding the solenoid valve 74 in the excited state so that the hydraulic oil controlled by the electro-hydraulic converter 71 can flow into the cylinder 72. Meanwhile, in the FCC 2, when it is judged by the FCC 2 that the operations of the normal control section 62 and the actuator section 7 are normal based on the normal control section monitoring result and the actuator section monitoring result transmitted from the monitoring section 63 via the data bus 3, the BSW command and the BC command are set to 'off'. Accordingly, the switching section 65 feeds the NACT signal output from the normal control section 62 to the amplifier section 66. Consequently, the angle of the flight control surface 5 is controlled by the normal control section 62 based on the surface control signal transmitted from the FCC 2.

### B. Backup Control Operation

In the normal control operation, when it is judged by the monitoring section 63 that the operation of either one of or both of the normal control section 62 and the actuator section 7 is not normal, the NC command output from the monitoring section 63 is set to 'off'. In this case, since the BC command is 'off', the control command output from the control command output section 67 is switched to 'off', thereby making the solenoid valve 74 in the non-excited state. Therefore, the hydraulic oil is not flowed into the cylinder 72 and the control of the flight control surface 5 is temporarily suspended.

Meanwhile, when it is judged by the FCC 2, based on the normal control section monitoring result and the actuator section monitoring result transmitted from the monitoring section 63, that the operation of the normal control section 62 is abnormal while the operation of the actuator section 7 is normal, the FCC 2 sets the BC command and the BSW command to 'on'. The BC command and the BSW command are transmitted to the backup control section 64 through the data bus 3 and the interface section 61 and are output from the backup control section 64. The BC command is fed into the second input terminal of the control command output section 67 and thus the control command that is the output of the control command output section 67 returns to the 'on' state. Accordingly, the solenoid valve 74 is excited again and the flow passage of the hydraulic oil to the drain is resumed to be in the closed state, thereby enabling the control of the flight control surface 5. The BSW command switches the switching section 65 such that the BACT signal is being fed into the amplifier section 66. Consequently, the angle of the flight control surface 5 is controlled by the backup control section 64 based on the surface control signal transmitted from the FCC 2.

Additionally, when it is judged by the FCC 2 that a predetermined number of ACEs 6, out of a plurality of ACEs 6 arranged for a single piece of the flight control surface 5, are controlled by the backup control sections 64, it is desirable that all of the plurality of ACEs 6 arranged for the single piece of the flight control surface 5 be switched to the backup control operations by sending the BSW command and the BC command to all of the ACEs 6 arranged for the single piece of the flight control surface 5. This is to avoid a situation where one single flight control surface 5 is being controlled by the normal control section 62 and the backup control section 64 simultaneously.

### C. Control Cancel Operation

When it is judged by the FCC 2, based on the normal control section monitoring result and the actuator section monitoring result transmitted from the monitoring section 63 via the data bus 3, that the operations of both the normal control section 62 and the actuator section 7 or the operation of the actuator section 7 is abnormal, the FCC 2 does not set the BC command and the BSW command to 'on'. In this case, since the NC command output from the monitoring section 63 is 'off', the output of the control command output section 67 remains to be in 'off' state holding the solenoid valve 74 in the non-excited state. Consequently, the corresponding ACE 6 and actuator section 7 coupled with that ACE 6 remain in the state where the control of the flight control surface 5 is being halted. The corresponding flight control surface 5 is to be controlled by the other ACE 6 and actuator section 7 pairs, i.e. other surface control devices 4, arranged for that flight control surface 5.

As described in the foregoing, in the present embodiment, when a failure should ever occur to the normal control section 62, as long as the actuator section 7 operates properly, the control of the flight control surface 5 can be automatically switched to the control by the backup control section 64. When it is judged that the operation of the actuator section 7 is faulty, the control of the flight control surface 5 by the corresponding ACE 6 is being halted, and thus the control operation of the other ACEs 6, i.e. other surface control devices 4, arranged for that flight control surface 5 can be prevented from being adversely affected.

### Second Embodiment

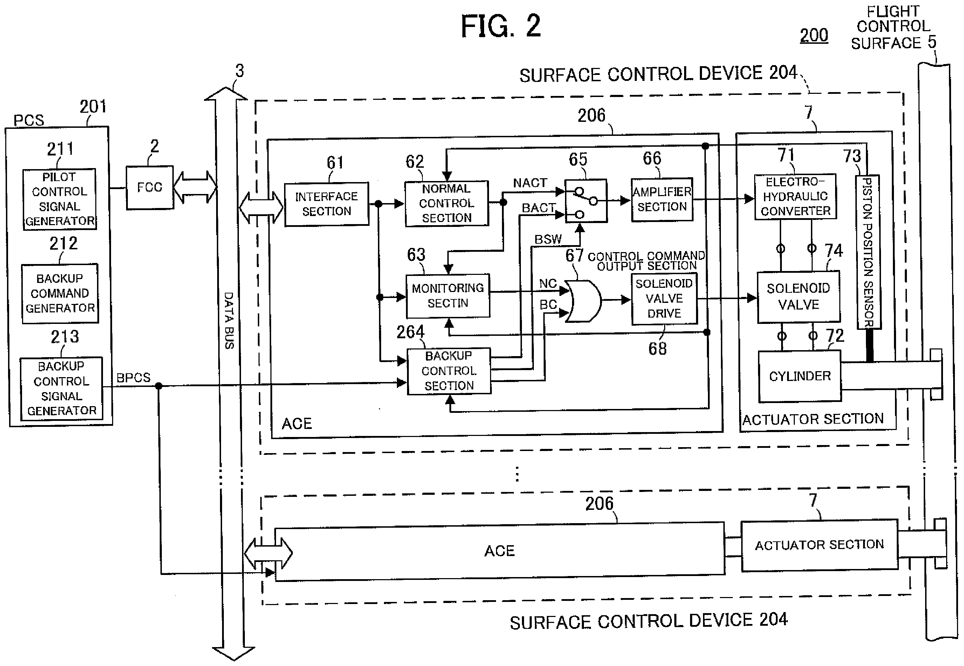

A second embodiment of the present invention is a case in which the surface control signal and backup commands for backup control operation are separately output from the PCS. The configuration of a flight control system according to the second embodiment will be described first. FIG. 2 is a block diagram schematically showing a flight control system 200 according to the second embodiment. For the constituents which are the same as or similar to those of the flight control system according to the first embodiment, the same reference numerals and symbols as those of the first embodiment are given and their detailed descriptions are omitted.

As shown in FIG. 2, the flight control system 200 according to the second embodiment, similar to the flight control system according to the first embodiment, is composed of a PCS 201, the FCC 2, the data bus 3, a surface control device 204, and the flight control surface 5. The PCS 201 includes, in addition to a pilot control signal generator 211 generating and outputting control operations of a pilot as a normal pilot control signal, a backup command generator 212 outputting backup commands (BC/BSW command) in response to the operation of the pilot, and a backup control signal generator 213 outputting control operations of the pilot for backup operation as a backup control signal (BPCS signal).

The surface control device 204 is composed of an ACE 206 and the actuator section 7, and a plurality of surface control devices 204 are coupled with a single piece of the flight control surface 5. The ACE 206, similar to the ACE 6 in the first embodiment, includes the interface section 61, the normal control section 62, the monitoring section 63, a backup control section 264, the switching section 65, the amplifier section 66, the control command output section 67, and the solenoid valve driver 68. However, the signal routes fed into the backup control section 264 are different from those of the first embodiment. More specifically, in the backup control section 264, the backup commands output from the backup command generator 212 in the PCS 201 are fed to the backup control section 264 through the FCC 2, the data bus 3, and the interface section 61 in the ACE 206, and the BPCS signal output from the backup control signal generator 213 in the PCS 201 is fed to the backup control section 264 directly. Other signal routes are the same as those of the first embodiment.

Next, their functions will be described primarily on the differences from those of the first embodiment. When the pilot switches to control the flight control surface via the backup control section 264, for example, by recognizing an abnormality of operation in the normal control section 62 of the ACE 206, the PCS 201 outputs the backup commands that are the BSW command and the BC command to the FCC 2. The BPCS signal that is the control signal of the pilot for backup operation is being fed from the PCS 201 to the backup control section 264 in the ACE 206 directly.

The FCC 2 outputs the backup commands to the ACE 206 via the data bus 3. The backup control section 264, by executing a backup control program with the BPCS signal directly fed from the PCS 201 as a surface control signal in backup control operation, outputs the backup actuator operation signal (BACT signal). Other functions are the same as those of the first embodiment and thus their redundant descriptions are omitted.

Now, the operations of the system will be described primarily on the differences from those of the first embodiment.

### A. Normal Control Operation

The operation in normal control operation is the same as that of the first embodiment, and thus the angle of the flight control surface 5 is controlled by the normal control section 62 based on the surface control signal transmitted from the FCC 2.

### B. Backup Control Operation

In the normal control operation, when it is judged by the monitoring section 63 that the operation of either one of or both of the normal control section 62 and the actuator section 7 is not normal, the NC command output from the monitoring section 63 is set to 'off'. In this case, since the BC command is 'off', the control command output from the control command output section 67 is switched to 'off', thereby making the solenoid valve 74 in the non-excited state. Consequently, the hydraulic oil is not flowed into the cylinder 72 and the control of the flight control surface 5 is temporarily suspended.

In the PCS 201, when the control operation is switched to control the flight control surface via the backup control section 264 by the operation of the pilot, the PCS 201 outputs the backup commands. The backup commands are output to the FCC 2. In the FCC 2, when it is judged by the FCC 2, based on the normal control section monitoring result and the actuator section monitoring result transmitted from the monitoring section 63, that the operation of the normal control section 62 is abnormal while the operation of the actuator section 7 is normal, the FCC 2 outputs the backup commands that are the BC command and the BSW command. These commands are transmitted to the backup control section 264 through the data bus 3 and the interface section 61 and are output as the BC command and the BSW command in their appropriate formats. The BPCS signal is directly fed into the backup control section 264 in the ACE 206 and the BACT signal is obtained.

The BC command is fed into the second input terminal of the control command output section 67 and thus the control command that is the output of the control command output section 67 returns to the 'on' state. Accordingly, the solenoid valve 74 is excited again and the flow passage of the hydraulic oil to the drain is resumed to be in the closed state, thereby enabling the control of the flight control surface 5. The BSW command switches the switching section 65 such that the BACT signal is being fed into the amplifier section 66. As a consequence, the angle of the flight control surface 5 is controlled by the backup control section 264 based on the BPCS signal transmitted directly from the PCS 201.

### C. Control Cancel Operation

When it is judged by the FCC 2, based on the normal control section monitoring result and the actuator section monitoring result transmitted from the monitoring section 63 via the data bus 3, that the operations of both the normal control section 62 and the actuator section 7 or the operation of the actuator section 7 is abnormal, the FCC 2 does not set the BC command and the BSW command to 'on'. In this case, since the NC command output from the monitoring section 63 is 'off', the output of the control command output section 67 remains to be in 'off' state holding the solenoid valve 74 in the non-excited state. Consequently, the corresponding ACE 206 and the actuator section 7 coupled with that ACE 206 remain in the state where the control of the flight control surface 5 is being halted. The corresponding flight control surface 5 is to be controlled by the other ACE 206 and actuator section 7 pairs, i.e. other surface control devices 204, arranged for that flight control surface 5.

As described in the foregoing, in the present embodiment, when a failure should ever occur to the normal control section 62, as long as the actuator section 7 operates properly, the control of the flight control surface 5 can be promptly switched to the control by the backup control section 264. When it is judged that the operation of the actuator section 7 is faulty, the control of the flight control surface 5 by the corresponding ACE 206 is being halted, and thus the control operation of other ACEs 206, i.e. other surface control devices 204, arranged for that flight control surface 5 can be prevented from being adversely affected.

Furthermore, since the PCS 201 is configured to output the backup control signal (BPCS signal) and the backup commands separately for backup operation, even when a failure occurs to a part of the PCS 201 relevant to generating and outputting the pilot control signal in normal operation or a part of the FCC 2 relevant to those signals, the control by the backup control section 264 can be still available.

### Third Embodiment

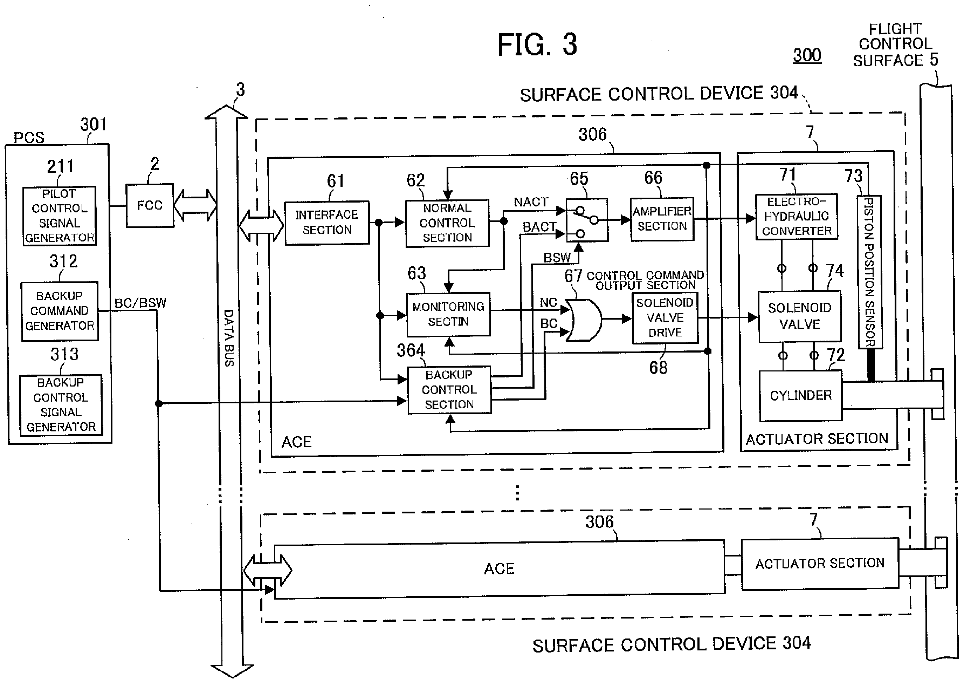

A third embodiment of the present invention is a case in which the surface control signal and the backup commands for backup control operation are separately output from the PCS. The configuration of a flight control system according to the third embodiment will be described first. FIG. 3 is a block diagram schematically showing a flight control system 300 according to the third embodiment. For the constituents which are the same as or similar to those of the flight control systems according to the first and second embodiments, the same reference numerals and symbols as those of the first and second embodiments are given and their detailed descriptions are omitted.

As shown in FIG. 3, the flight control system 300 according to the third embodiment, similar to the flight control systems of the first and second embodiments, is composed of a PCS 301, the FCC 2, the data bus 3, a surface control device 304, and the flight control surface 5. The PCS 301 includes, in addition to the pilot control signal generator 211 generating and outputting control operations of the pilot as the normal pilot control signal, a backup command generator 312 outputting the backup commands (BC/BSW command) in response to the operation of the pilot, and a backup control signal generator 313 outputting control operations of the pilot for backup operation as the backup control signal (BPCS signal).

The surface control device 304 is composed of an ACE 306 and the actuator section 7, and a plurality of surface control devices 304 are coupled with a single piece of the flight control surface 5. The ACE 306, similar to the ACE 6 in the first embodiment, includes the interface section 61, the normal control section 62, the monitoring section 63, a backup control section 364, the switching section 65, the amplifier section 66, the control command output section 67, and the solenoid valve driver 68. However, the signal routes fed into the backup control section 364 are different from those of the first and second embodiments. More specifically, in the backup control section 364, the backup commands output from the backup command generator 312 in the PCS 301 are fed to the backup control section 364 directly, while the BPCS signal output from the backup control signal generator 313 in the PCS 301 is fed to the backup control section 364 through the FCC 2, the data bus 3, and the interface section 61 in the ACE 306. Other signal routes are the same as those of the first embodiment.

Next, their functions will be described primarily on the differences from those of the first and second embodiments. When the pilot switches to control the flight control surface via the backup control section 364, for example, by recognizing an abnormality of operation in the normal control section 62 of the ACE 306, the PCS 301 outputs the backup commands that are the BSW command and the BC command directly to the backup control section 364 in the ACE 306. The BPCS signal that is the control signal of the pilot for backup operation is being fed from the PCS 301 to the FCC 2.

The FCC 2 outputs the BPCS signal to the ACE 306 via the data bus 3. The backup control section 364, by executing a backup control program with the BPCS signal fed through the FCC 2, the data bus 3, and the interface section 61 in the ACE 306 as a surface control signal in backup control operation, outputs the backup actuator operation signal (BACT signal). Further, the backup control section 364 receives and converts the backup commands that are the BSW command and the BC command fed from the PCS 301 directly and outputs them in their appropriate formats. Other functions are the same as those of the first and second embodiments and thus their descriptions are omitted.

Now, the operations of the system will be described primarily on the differences from those of the first and second embodiments.

### A. Normal Control Operation

The operation in normal control operation is the same as that of the first and second embodiments, and thus the angle of the flight control surface 5 is controlled by the normal control section 62 based on the surface control signal transmitted from the FCC 2.

### B. Backup Control Operation

In the normal control operation, when it is judged by the monitoring section 63 that the operation of either one of or both of the normal control section 62 and the actuator section 7 is not normal, the NC command output from the monitoring section 63 is set to 'off'. In this case, since the BC command is 'off', the control command output from the control command output section 67 is switched to 'off', thereby making the solenoid valve 74 in the non-excited state. Consequently, the hydraulic oil is not flowed into the cylinder 72 and thus the control of the flight control surface 5 is temporarily suspended.

In the PCS 301, when the control operation is switched to control the flight control surface via the backup control section 364 by the operation of the pilot, the PCS 301 outputs the backup commands. In this case, the PCS 301 outputs the backup commands that are the BC command and the BSW command when it is judged by the FCC 2, based on the normal control section monitoring result and the actuator section monitoring result transmitted from the monitoring section 63, that the operation of the normal control section 62 is abnormal while the operation of the actuator section 7 is normal. These commands are directly fed to the backup control section 364 and are output as the BC command and the BSW command in their appropriate formats. The BPCS signal via the FCC 2 is fed into the backup control section 364 in the ACE 306 and the BACT signal is obtained.

The BC command is fed into the second input terminal of the control command output section 67 and thus the control command that is the output of the control command output section 67 returns to the 'on' state. Accordingly, the solenoid valve 74 is excited again and the flow passage of the hydraulic oil to the drain is resumed to be in the closed state, thereby enabling the control of the flight control surface 5. The BSW command switches the switching section 65 such that the BACT signal is being fed into the amplifier section 66. Consequently, the angle of the flight control surface 5 is controlled by the backup control section 364 based on the BPCS signal transmitted from the PCS 301 via the FCC 2.

### C. Control Cancel Operation

In the PCS 301, when it is judged by the FCC 2, based on the normal control section monitoring result and the actuator section monitoring result transmitted from the monitoring section 63 via the data bus 3, that the operations of both the normal control section 62 and the actuator section 7 or the operation of the actuator section 7 is abnormal, the PCS 301 does not set the BC command and the BSW command to 'on'. In this case, since the NC command output from the monitoring section 63 is 'off', the output of the control command output section 67 remains to be in 'off' state holding the solenoid valve 74 in the non-excited state. Consequently, the corresponding ACE 306 and the actuator section 7 coupled with that ACE 306 remain in the state where the control of the flight control surface 5 is being halted. The corresponding flight control surface 5 is to be controlled by the other ACE 306 and actuator section 7 pairs, i.e. other surface control devices 304, arranged for that flight control surface 5.

As described in the foregoing, in the present embodiment, when a failure should ever occur to the normal control section 62, as long as the actuator section 7 operates properly, the control of the flight control surface 5 can be promptly switched to the control by the backup control section 364. When it is judged that the operation of the actuator section 7 is faulty, the control of the flight control surface 5 by the corresponding ACE 306 is being halted, and thus the control operation of other ACEs 306, i.e. other surface control devices 304, arranged for that flight control surface 5 can be prevented from being adversely affected.

Furthermore, since the PCS 301 is configured to output the backup control signal (BPCS signal) and the backup commands separately for backup operation, even when a failure occurs to a part of the PCS 301 relevant to generating and outputting the pilot control signal in normal operation or a part of the FCC 2 relevant to those signals, the control by the backup control section 364 can be still available.

### Fourth Embodiment

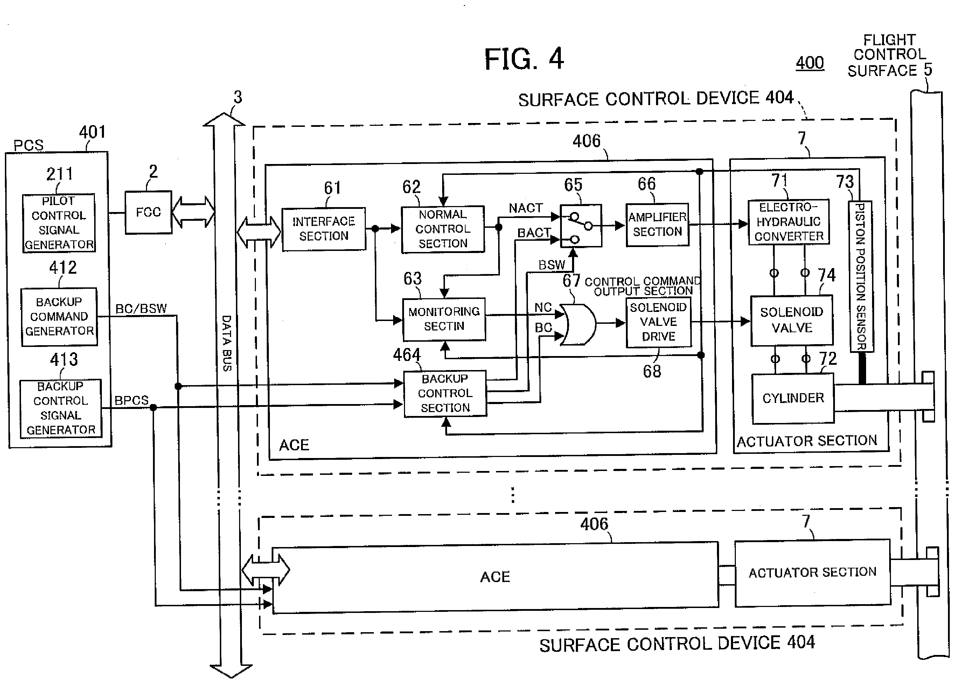

A fourth embodiment of the present invention is a case in which the surface control signal and the backup commands for backup control operation are separately output from the PCS and directly fed into the backup control section. The configuration of a flight control system according to the fourth embodiment will be described first. FIG. 4 is a block diagram schematically showing a flight control system 400 according to the fourth embodiment. For the constituents which are the same as or similar to those of the flight control systems according to the first to third embodiments, the same reference numerals and symbols as those of the first to third embodiments are given and their detailed descriptions are omitted.

As shown in FIG. 4, the flight control system 400 according to the fourth embodiment, similar to the flight control systems of the first to third embodiments, is composed of a PCS 401, the FCC 2, the data bus 3, a surface control device 404, and the flight control surface 5. The PCS 401 includes, in addition to the pilot control signal generator 211 generating and outputting control operations of the pilot as the normal pilot control signal, a backup command generator 412 outputting the backup commands (BC/BSW command) in response to the operation of the pilot, and a backup control signal generator 413 outputting control operations of the pilot for backup operation as the backup control signal (BPCS signal).

The surface control device 404 is composed of an ACE 406 and the actuator section 7, and a plurality of surface control devices 404 are coupled with a single piece of the flight control surface 5. The ACE 406 includes, similar to the ACE 6 in the first embodiment, the interface section 61, the normal control section 62, the monitoring section 63, a backup control section 464, the switching section 65, the amplifier section 66, the control command output section 67, and the solenoid valve driver 68. However, the signal routes fed into the backup control section 464 are different from those of the first to third embodiments. More specifically, in the backup control section 464, the backup commands output from the backup command generator 412 in the PCS 401 and the BPCS signal output from the backup control signal generator 413 in the PCS 401 are directly fed into the backup control section 464. Other signal routes are the same as those of the first embodiment.

Next, their functions will be described primarily on the differences from those of the first to third embodiments. When the pilot switches to control the flight control surface via the backup control section 464, for example, by recognizing an abnormality of operation in the normal control section 62 of the ACE 406, the PCS 401 directly outputs the backup commands that are the BSW command and the BC command to the backup control section 464 in the ACE 406. The PCS 401 also outputs the BPCS signal that is the control signal of the pilot for backup operation directly to the backup control section 464 in the ACE 406.

The backup control section 464, by carrying out a backup control program with the BPCS signal as a surface control signal in backup control operation, outputs the backup actuator operation signal (BACT signal). Further, the backup control section 464 receives and converts the backup commands that are the BSW command and the BC command and outputs them in their appropriate formats. Other functions are the same as those of the first to third embodiments and thus their descriptions are omitted.

Now, the operations of the system will be described primarily on the differences from those of the first to third embodiments.

### A. Normal Control Operation

The operation in normal control operation is the same as that of the first to third embodiments, and thus the angle of the flight control surface 5 is controlled by the normal control section 62 based on the surface control signal transmitted from the FCC 2.

### B. Backup Control Operation

In the normal control operation, when it is judged by the monitoring section 63 that the operation of either one of or the both of the normal control section 62 and the actuator section 7 is not normal, the NC command output from the monitoring section 63 is set to 'off'. In this case, since the BC command is 'off', the control command output from the control command output section 67 is switched to 'off', thereby making the solenoid valve 74 in the non-excited state. Consequently, the hydraulic oil is not flowed into the cylinder 72 and the control of the flight control surface 5 is temporarily suspended.

In the PCS 401, when the control operation is switched to control the flight control surface via the backup control section 464 by the operation of the pilot, the PCS 401 outputs the backup commands. In this case, the backup commands are output when it is judged by the FCC 2, based on the normal control section monitoring result and the actuator section monitoring result transmitted from the monitoring section 63, that the operation of the normal control section 62 is abnormal while the operation of the actuator section 7 is normal. The backup commands that are the BC command and the BSW command are directly fed to the backup control section 464 and are output as the BC command and the BSW command in their appropriate formats. The BPCS signal is also fed directly to the backup control section 464 in the ACE 406 and the BACT signal is obtained.

The BC command is fed into the second input terminal of the control command output section 67 and thus the control command that is the output of the control command output section 67 returns to the 'on' state. Accordingly, the solenoid valve 74 is excited again and the flow passage of the hydraulic oil to the drain is resumed to be in the closed state, thereby enabling the control of the flight control surface 5. The BSW command switches the switching section 65 such that the BACT signal is being fed into the amplifier section 66. Consequently, the angle of the flight control surface 5 is controlled by the backup control section 464 based on the BPCS signal transmitted directly from the PCS 401 to the backup control section 464.

### C. Control Cancel Operation

In the PCS 401, when it is judged by the FCC 2, based on the normal control section monitoring result and the actuator section monitoring result transmitted from the monitoring section 63 via the data bus 3, that the operations of both the normal control section 62 and the actuator section 7 or the operation of the actuator section 7 is abnormal, the PCS 401 does not set the BC command and the BSW command to 'on'. In this case, since the NC command output from the monitoring section 63 is 'off', the output of the control command output section 67 remains to be in 'off' state holding the solenoid valve 74 in the non-excited state. Consequently, the corresponding ACE 406 and the actuator section 7 coupled with that ACE 406 remain in the state where the control of the flight control surface 5 is being halted. The corresponding flight control surface 5 is to be controlled by the other ACE 406 and actuator section 7 pairs, i.e. other surface control devices 404, arranged for that flight control surface 5.

As described in the foregoing, in the present embodiment, when a failure should ever occur to the normal control section 62, as long as the actuator section 7 operates properly, the control of the flight control surface 5 can be promptly switched to the control by the backup control section 464. When it is judged that the operation of the actuator section 7 is faulty, the control of the flight control surface 5 by the corresponding ACE 406 is being halted, and thus the control operation of other ACEs 406, i.e. other surface control devices 404, arranged for that flight control surface 5 can be prevented from being adversely affected.

Furthermore, since the PCS 401 is configured to output the backup control signal (BPCS signal) and the backup commands separately for backup operation, even when a failure occurs to a part of the PCS 401 relevant to generating and outputting the pilot control signal in normal operation or a part of the FCC 2 relevant to those signals, the control by the backup control section 464 can be still available.

Additionally, it is exemplified such that the backup commands are output from the PCS 401 in response to the judgment of the FCC 2 based on the monitoring results of the monitoring section 63, it may be configured not to rely on the judgment of the FCC 2. In other words, it may be configured to forcibly output the backup commands. Accordingly, it is still possible to control the control operation by switching to the control via the backup control section 464 even when the FCC 2 is being faulty.

### Fifth Embodiment

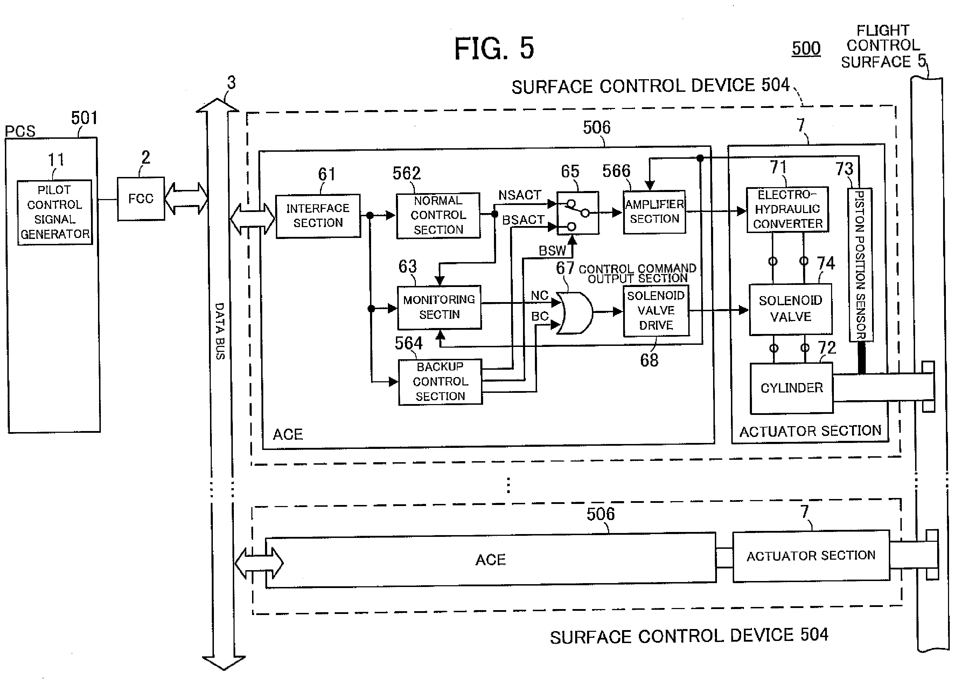

A fifth embodiment of the present invention is a case in which the amplifier section in the first embodiment is configured as a servo amplifier. First, the configuration of a flight control system according to the fifth embodiment will be described. FIG. 5 is a block diagram schematically showing a flight control system 500 according to the fifth embodiment. For the constituents which are the same as or similar to those of the flight control systems according to the first to fourth embodiments, the same reference numerals and symbols as those of the first to fourth embodiments are given and their detailed descriptions are omitted.

As shown in FIG. 5, the flight control system 500 according to the fifth embodiment is, similar to the flight control systems of the first to fourth embodiments, composed of a PCS 501, the FCC 2, the data bus 3, a surface control device 504, and the flight control surface 5. The PCS 501 is configured as the same as the PCS 1 in the first embodiment, and generates and outputs the pilot control signal based on the operations of the control stick and the like by the pilot.

The surface control device 504 is composed of an ACE 506 and the actuator section 7, and a plurality of surface control devices 504 are coupled with a single piece of the flight control surface 5. The ACE 506 includes, similar to the ACE 6 in the first embodiment, the interface section 61, a normal control section 562, the monitoring section 63, a backup control section 564, the switching section 65, an amplifier section 566, the control command output section 67, and the solenoid valve driver 68. However, the configuration of the normal control section 562, the backup control section 564, and the amplifier section 566 are different from those of the first to fourth embodiments.

More specifically, in the normal control section 562, while the pilot control signal from the PCS 501 is fed through the FCC 2, the data bus 3, and the interface section 61 in the ACE 506, the connection from the piston position sensor 73 is not provided and the servo calculation function is not available either, not like the cases of the first to fourth embodiments. In the backup control section 564, while the pilot control signal from the PCS 501 is fed through the FCC 2, the data bus 3, and the interface section 61 in the ACE 506, the connection from the piston position sensor 73 is not provided and the servo calculation function is not provided either, not as in the cases of the first to fourth embodiments. The amplifier section 566 is configured as a so-called servo amplifier composed of a servo calculating unit and an amplifier. The amplifier section 566 is connected with the output from the switching section 65 as an input signal and the piston position signal from the piston position sensor 73 (feedback signal) as a further input signal. The output from the piston position sensor 73 in the actuator section 7 is only connected, as described above, to the monitoring section 63 and to the amplifier section 566 that is the servo amplifier. Other signal routes are the same as those of the first embodiment.

Next, their functions will be described primarily on the differences from those of the first embodiment. The PCS 501 generates the pilot control signal in response to the signals from the control stick and various control switches operated by the pilot and outputs it to the FCC 2. The FCC 2 outputs comprehensive control signals, including the surface control signal, for the engines, each of the flight control surfaces 5 and other auxiliaries based on the pilot control signal transmitted from the PCS 501 and the signals from various sensors indicative of conditions of the aircraft. The surface control signal is sent to the ACE 506 via the data bus 3.

The normal control section 562, by executing a preinstalled normal control program, outputs a normal secondary actuator operation signal (NSACT signal) whose values are based on the surface control signal transmitted from the FCC 2 via the data bus 3.

The monitoring section 63, by executing a preinstalled monitoring program, calculates a monitor secondary actuator operation signal (MSACT signal) whose values are based on the surface control signal transmitted from the FCC 2 via the data bus 3 in a similar manner to that of the normal control section 562. The monitoring section 63, by executing the monitoring program, further monitors whether or not the MSACT signal and the NSACT signal calculated by the normal control section 562 agree with each other within a predetermined range. When they agree, it is judged by the monitoring section 63 that the operation of the normal control section 562 is normal and, when they do not agree, it is judged that the operation of the normal control section 562 is abnormal. Furthermore, the monitoring section 63, by executing the monitoring program, monitors whether or not the MSACT signal and the piston position signal output from the piston position sensor 73 agree with each other within a predetermined range. When they agree, it is judged that the operation of the actuator section 7 is normal and, when they do not agree, it is judged that the operation of the actuator section 7 is abnormal.

The backup control section 564, by carrying out a backup control program, outputs a backup secondary actuator operation signal (BSACT signal) whose values are based on the surface control signal transmitted from the FCC 2 via the data bus 3. Further, the backup control section 564 receives and converts the backup commands that are the BSW command and the BC command transmitted through the FCC 2 and the data bus 3 and outputs them in their appropriate formats.

The amplifier section 566 is a servo amplifier, i.e. servo calculator, and carries out a so-called servo calculation process based on the input signal that is the output signal from the switching section 65 (NSACT signal or BSACT signal) and the feedback signal that is the piston position signal from the piston position sensor 73. The amplifier section 566 then amplifies the calculation results and supplies them to the electro-hydraulic converter 71 in the actuator section 7 as the actuator operation signal. Other functions are the same as those of the first embodiment and thus their descriptions are omitted.

Now, the operations of the system will be described primarily on the differences from those of the first embodiment.

### A. Normal Control Operation

The normal control section 562 outputs the NSACT signal whose values are based on the surface control signal, but not carrying out a so-called servo calculation process. The amplifier section 566 carries out this servo calculation process based on the NSACT signal fed through the switching section 65 and the piston position signal from the piston position sensor 73 and performs power-amplification. Other operations are the same as those of the first embodiment, and thus the angle of the flight control surface 5 is controlled by the normal control section 562 based on the surface control signal transmitted from the FCC 2.

### B. Backup Control Operation

In the normal control operation, when it is judged by the monitoring section 63 that the operation of either one of or the both of the normal control section 562 and the actuator section 7 is not normal, the NC command output from the monitoring section 63 is set to 'off'. In this case, since the BC command is 'off', the control command output from the control command output section 67 is switched to 'off', thereby making the solenoid valve 74 in the non-excited state. Consequently, the hydraulic oil is not flowed into the cylinder 72 and thus the control of the flight control surface 5 is temporarily suspended.

In the FCC 2, when it is judged by the FCC 2, based on the normal control section monitoring result and the actuator section monitoring result transmitted from the monitoring section 63, that the operation of the normal control section 562 is abnormal while the operation of the actuator section 7 is normal, the FCC 2 outputs the BC command and the BSW command. These commands are fed to the backup control section 564 through the data bus 3 and the interface section 61 and are output as the BC command and the BSW command in their appropriate formats.

The BC command is fed into the second input terminal of the control command output section 67 and thus the control command that is the output of the control command output section 67 returns to the 'on' state. Accordingly, the solenoid valve 74 is excited again and the flow passage of the hydraulic oil to the drain is resumed to be in the closed state, thereby enabling the control of the flight control surface 5. The BSW command switches the switching section 65 such that the BSACT signal is being fed into the amplifier section 566. The amplifier section 566 thus carries out the servo calculation based on the BSACT signal and the piston position signal and amplifies the calculation results to make the signal sufficient to drive the actuator. Consequently, the angle of the flight control surface 5 is controlled by the backup control section 564 based on the surface control signal transmitted from the FCC 2.

### C. Control Cancel Operation

When it is judged by the FCC 2, based on the normal control section monitoring result and the actuator section monitoring result transmitted from the monitoring section 63 via the data bus 3, that the operations of both the normal control section 62 and the actuator section 7 or the operation of the actuator section 7 is abnormal, the FCC 2 does not output the BC command and the BSW command. In this case, since the NC command output from the monitoring section 63 is 'off', the output of the control command output section 67 remains to be in 'off' state holding the solenoid valve 74 in the non-excited state. Consequently, the corresponding ACE 506 and the actuator section 7 coupled with that ACE 506 remain in the state where the control of the flight control surface 5 is being halted. The corresponding flight control surface 5 is to be controlled by the other ACE 506 and actuator section 7 pairs, i.e. other surface control devices 504, arranged for that flight control surface 5.

As described in the foregoing, in the present embodiment, when a failure should ever occur to the normal control section 562, as long as the actuator section 7 operates properly, the control of the flight control surface 5 can be automatically switched to the control by the backup control section 564. When it is judged that the operation of the actuator section 7 is faulty, the control of the flight control surface 5 by the corresponding ACE 506 is being halted, and thus the control operation of other ACEs 506, i.e. other surface control devices 504, arranged for that flight control surface 5 can be prevented from being adversely affected.

Furthermore, since the servo calculation process is configured to be carried out by the servo amplifier which is composed of discrete components, the internal structure of the normal control section 562 and that of the backup control section 564 can be made simple.

### Sixth Embodiment

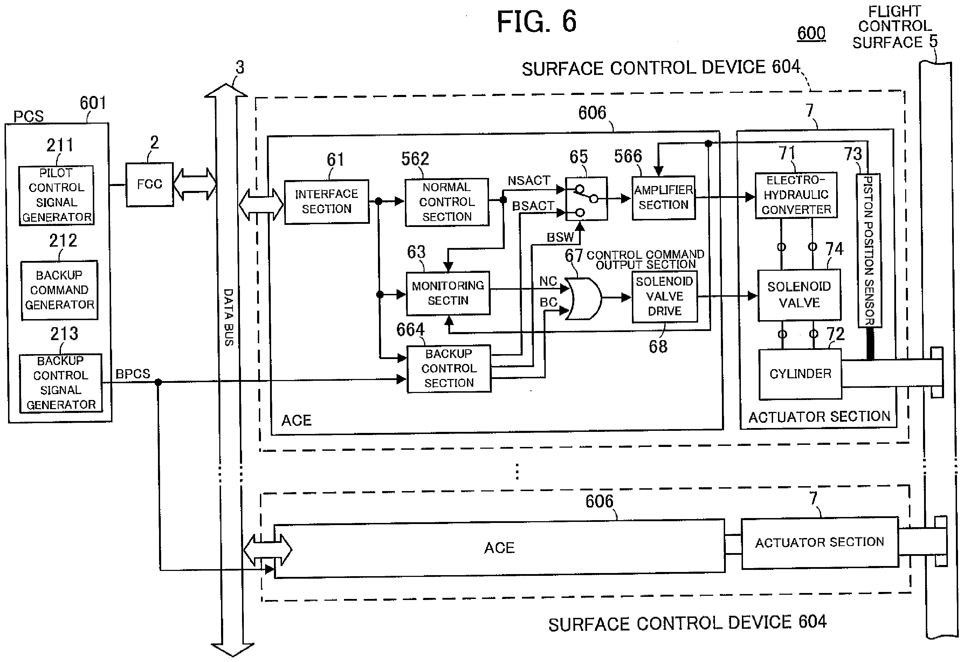

A sixth embodiment of the present invention is a case in which the amplifier section in the second embodiment is configured as a servo amplifier and the surface control signal and the backup commands for backup control operation are separately output from the PCS. The configuration of a flight control system according to the sixth embodiment will be described first. FIG. 6 is a block diagram schematically showing a flight control system 600 according to the sixth embodiment. For the constituents which are the same as or similar to those of the flight control systems according to the first to fifth embodiments, the same reference numerals and symbols as those of the first to fifth embodiments are given and their detailed descriptions are omitted.

As shown in FIG. 6, the flight control system 600 according to the sixth embodiment is similar to the flight control systems according to the first to fifth embodiments and is composed of a PCS 601, the FCC 2, the data bus 3, a surface control device 604, and the flight control surface 5. The PCS 601 is configured as the same as the PCS 201 in the second embodiment and, in addition to the pilot control signal generator 211 generating and outputting control operations of the pilot as the normal pilot control signal, includes the backup command generator 212 outputting the backup commands (BC/BSW command) in response to the operation of the pilot, and the backup control signal generator 213 outputting control operations of the pilot for backup operation as the backup control signal (BPCS signal).

The surface control device 604 is composed of an ACE 606 and the actuator section 7, and a plurality of surface control devices 604 are coupled with a single piece of the flight control surface 5. The ACE 606, similar to the ACE 506 in the fifth embodiment, the interface section 61, includes the normal control section 562, the monitoring section 63, a backup control section 664, the switching section 65, the amplifier section 566, the control command output section 67, and the solenoid valve driver 68. However, the signal routes fed into the backup control section 664 are different from those of the fifth embodiment. More specifically, in the backup control section 664, the backup commands output from the backup command generator 212 in the PCS 601 are fed to the backup control section 664 through the FCC 2, the data bus 3, and the interface section 61 in the ACE 606, and the BPCS signal output from the backup control signal generator 213 in the PCS 601 is fed to the backup control section 664 directly. Other signal routes are the same as those of the fifth embodiment.

Next, their functions will be described primarily on the differences from those of the fifth embodiment. When the pilot switches to control the flight control surface via the backup control section 664, for example, by recognizing an abnormality of operation in the normal control section 562 of the ACE 606, the PCS 601 outputs the backup commands that are the BSW command and the BC command to the FCC 2. The PCS 601 also outputs the BPCS signal that is the control signal of the pilot for backup operation to the backup control section 664 in the ACE 606 directly.

The FCC 2 outputs the backup commands to the ACE 606 via the data bus 3. The normal control section 562 in the ACE 606, as the same as that of the fifth embodiment, by executing the normal control program, outputs the normal secondary actuator operation signal (NSACT signal) whose values are based on the surface control signal transmitted from the FCC 2 via the data bus 3. The backup control section 664, by carrying out a backup control program with the BPCS signal directly fed from the PCS 601 as a surface control signal in backup control operation, outputs the backup secondary actuator operation signal (BSACT signal) whose values are based on the BPCS signal. Further, the backup control section 664 receives and converts the backup commands that are the BSW command and the BC command transmitted from the FCC 2 via the data bus 3 and outputs them in their appropriate formats. Other functions are the same as those of the fifth embodiment and thus their descriptions are omitted.

Now, the operations of the system will be described primarily on the differences from those of the fifth embodiment.

### A. Normal Control Operation

The operation in normal control operation is the same as that of the fifth embodiment, and thus its description is omitted. Accordingly, the angle of the flight control surface 5 is controlled by the normal control section 562 based on the surface control signal transmitted from the FCC 2.

### B. Backup Control Operation

In the normal control operation, when it is judged by the monitoring section 63 that the operation of either one of or the both of the normal control section 562 and the actuator section 7 is not normal, the NC command output from the monitoring section 63 is set to 'off'. In this case, since the BC command is 'off', the control command output from the control command output section 67 is switched to 'off', thereby making the solenoid valve 74 in the non-excited state. Consequently, the hydraulic oil is not flowed into the cylinder 72 and the control of the flight control surface 5 is temporarily suspended.

In the PCS 601, when the control operation is switched to control the flight control surface via the backup control section 664 by the operation of the pilot, the PCS 601 outputs the backup commands. The backup commands are output to the FCC 2. In the FCC 2, when it is judged by the FCC 2, based on the normal control section monitoring result and the actuator section monitoring result transmitted from the monitoring section 63, that the operation of the normal control section 562 is abnormal while the operation of the actuator section 7 is normal, the FCC 2 outputs the backup commands that are the BC command and the BSW command. These commands are transmitted to the backup control section 664 through the data bus 3 and the interface section 61 and are output as the BC command and the BSW command in their appropriate formats. The BPCS signal is directly fed into the backup control section 664 in the ACE 606 and the BSACT signal is obtained.

The BC command is fed into the second input terminal of the control command output section 67 and thus the control command that is the output of the control command output section 67 returns to the 'on' state. Accordingly, the solenoid valve 74 is excited again and the flow passage of the hydraulic oil to the drain is resumed to be in the closed state, thereby enabling the control of the flight control surface 5. The BSW command switches the switching section 65 such that the BSACT signal is being fed into the amplifier section 566. The amplifier section 566 thus carries out the servo calculation based on the BSACT signal and the piston position signal and performs power-amplification required. Consequently, the angle of the flight control surface 5 is controlled by the backup control section 664 based on the BPCS signal transmitted directly from the PCS 601.

### C. Control Cancel Operation

When it is judged by the FCC 2, based on the normal control section monitoring result and the actuator section monitoring result transmitted from the monitoring section 63 via the data bus 3, that the operations of both the normal control section 562 and the actuator section 7 or the operation of the actuator section 7 is abnormal, the FCC 2 does not set the BC command and the BSW command to 'on'. In this case, since the NC command output from the monitoring section 63 is 'off', the output of the control command output section 67 remains to be in 'off' state holding the solenoid valve 74 in the non-excited state. Consequently, the corresponding ACE 606 and the actuator section 7 coupled with that ACE 606 remain in the state where the control of the flight control surface 5 is being halted. The corresponding flight control surface 5 is to be controlled by the other ACE 606 and actuator section 7 pairs, i.e. other surface control devices 604, arranged for that flight control surface 5.

As described in the foregoing, in the present embodiment, when a failure should ever occur to the normal control section 562, as long as the actuator section 7 operates properly, the control of the flight control surface 5 can be promptly switched to the control by the backup control section 664. When it is judged that the operation of the actuator section 7 is faulty, the control of the flight control surface 5 by the corresponding ACE 606 is being halted, and thus the control operation of other ACEs 606, i.e. other surface control devices 604, arranged for that flight control surface 5 can be prevented from being adversely affected.

Furthermore, since the PCS 601 is configured to output the backup control signal (BPCS signal) and the backup commands separately for backup operation, even when a failure occurs to a part of the PCS 601 relevant to generating and outputting the pilot control signal in normal operation or a part of the FCC 2 relevant to those signals, the control by the backup control section 664 can be still available.

Additionally, since the servo calculation process is configured to be carried out by the servo amplifier which is composed of discrete components, the internal structure of the normal control section 562 and that of the backup control section 664 can be made simple.

### Seventh Embodiment

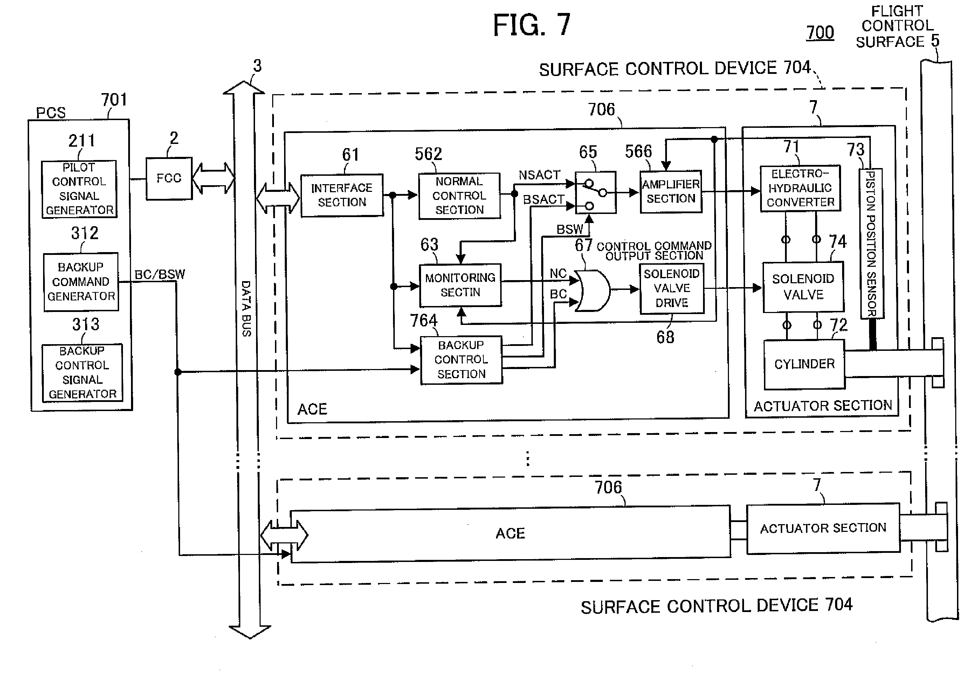

A seventh embodiment of the present invention is a case in which the amplifier section in the third embodiment is configured as a servo amplifier and the surface control signal and the backup commands for backup control operation are separately output from the PCS. The configuration of a flight control system according to the seventh embodiment will be described first. FIG 7 is a block diagram schematically showing a flight control system 700 according to the seventh embodiment. For the constituents which are the same as or similar to those of the flight control systems according to the first to sixth embodiments, the same reference numerals and symbols as those of the first to sixth embodiments are given and their detailed descriptions are omitted.

As shown in FIG. 7, the flight control system 700 according to the seventh embodiment, similar to the flight control systems of the first to sixth embodiments, is composed of a PCS 701, the FCC 2, the data bus 3, a surface control device 704, and the flight control surface 5. The PCS 701 is configured as the same as the PCS 301 in the third embodiment and, in addition to the pilot control signal generator 211 generating and outputting control operations of the pilot as the normal pilot control signal, includes the backup command generator 312 outputting the backup commands (BC/BSW command) in response to the operation of the pilot, and the backup control signal generator 313 outputting control operations of the pilot for backup operation as the backup control signal (BPCS signal).

The surface control device 704 is composed of an ACE 706 and the actuator section 7, and a plurality of surface control devices 704 are coupled with a single piece of the flight control surface 5. The ACE 706, similar to the ACE 506 in the fifth embodiment, includes the interface section 61, the normal control section 562, the monitoring section 63, a backup control section 764, the switching section 65, the amplifier section 566, the control command output section 67, and the solenoid valve driver 68. However, the signal routes fed into the backup control section 764 are different from those of the fifth and sixth embodiments. More specifically, in the backup control section 764, the backup commands output from the backup command generator 312 in the PCS 701 are fed to the backup control section 764 directly, while the BPCS signal output from the backup control signal generator 313 in the PCS 701 is fed to the backup control section 764 through the FCC 2, the data bus 3, and the interface section 61 in the ACE 706. Other signal routes are the same as those of the fifth embodiment.

Next, their functions will be described primarily on the differences from those of the fifth and sixth embodiments. When the pilot switches to control the flight control surface via the backup control section 764, for example, by recognizing an abnormality of operation in the normal control section 562 of the ACE 706, the PCS 701 outputs the backup commands that are the BSW command and the BC command directly to the backup control section 764 in the ACE 706. The PCS 701 outputs the BPCS signal that is the control signal of the pilot for backup operation to the FCC 2.

The FCC 2 outputs the BPCS signal to the ACE 706 via the data bus 3. The backup control section 764, by carrying out a backup control program with the BPCS signal fed through the FCC 2, the data bus 3, and the interface section 61 in the ACE 706 as a surface control signal in backup control operation, outputs the backup secondary actuator operation signal (BSACT signal) whose values are based on the BPCS signal. Further, the backup control section 764 receives and converts the backup commands that are the BSW command and the BC command fed directly from the PCS 701 and outputs them in their appropriate formats. Other functions are the same as those of the fifth and sixth embodiments and thus their descriptions are omitted.

Now, the operations of the system will be described primarily on the differences from those of the fifth and sixth embodiments.

### A. Normal Control Operation

The operation in normal control operation is the same as that of the fifth embodiment, and thus its description is omitted. Accordingly, the angle of the flight control surface 5 is controlled by the normal control section 562 based on the surface control signal transmitted from the FCC 2.

### B. Backup Control Operation

In the normal control operation, when it is judged by the monitoring section 63 that the operation of either one of or the both of the normal control section 562 and the actuator section 7 is not normal, the NC command output from the monitoring section 63 is set to 'off'. In this case, since the BC command is `off', the control command output from the control command output section 67 is switched to 'off', thereby making the solenoid valve 74 in the non-excited state. Consequently, the hydraulic oil is not flowed into the cylinder 72 and the control of the flight control surface 5 is temporarily suspended.

In the PCS 701, when the control operation is switched to control the flight control surface via the backup control section 764 by the operation of the pilot, the PCS 701 outputs the backup commands. The backup commands from the PCS 701 are output when it is judged by the FCC 2, based on the normal control section monitoring result and the actuator section monitoring result transmitted from the monitoring section 63, that the operation of the normal control section 562 is abnormal while the operation of the actuator section 7 is normal. The backup commands that are the BC command and the BSW command are directly fed from the PCS 701 to the backup control section 764 and are output as the BC command and the BSW command in their appropriate formats. The BPCS signal is fed into the backup control section 764 in the ACE 706 through the FCC 2, the data bus 3, and the interface section 61, and the BSACT signal is obtained.

The BC command is fed into the second input terminal of the control command output section 67, and thus the control command that is the output of the control command output section 67 returns to the 'on' state. Accordingly, the solenoid valve 74 is excited again and the flow passage of the hydraulic oil to the drain is resumed to be in the closed state, thereby enabling the control of the flight control surface 5. The BSW command switches the switching section 65 such that the BSACT signal is being fed into the amplifier section 566, i.e. the servo amplifier. As a consequence, the angle of the flight control surface 5 is controlled by the backup control section 764 based on the BPCS signal transmitted from the PCS 701 through the FCC 2, the data bus 3, and the interface section 61.

### C. Control Cancel Operation

In the PCS 701, when it is judged by the FCC 2, based on the normal control section monitoring result and the actuator section monitoring result transmitted from the monitoring section 63 via the data bus 3, that the operations of both the normal control section 562 and the actuator section 7 or the operation of the actuator section 7 is abnormal, the PCS 701 does not set the BC command and the BSW command to 'on'. In this case, since the NC command output from the monitoring section 63 is 'off', the output of the control command output section 67 remains to be in 'off' stage holding the solenoid valve 74 in the non-excited state. Consequently, the corresponding ACE 706 and the actuator section 7 coupled with that ACE 706 remain in the state where the control of the flight control surface 5 is being halted. The corresponding flight control surface 5 is to be controlled by the other ACE 706 and actuator section 7 pairs, i.e. other surface control devices 704, arranged for that flight control surface 5.

As described in the foregoing, in the present embodiment, when a failure should ever occur to the normal control section 562, as long as the actuator section 7 operates properly, the control of the flight control surface 5 can be promptly switched to the control by the backup control section 764. When it is judged that the operation of the actuator section 7 is faulty, the control of the flight control surface 5 by the corresponding ACE 706 is being halted, and thus the control operation of other ACEs 706, i.e. other surface control devices 704, arranged for that flight control surface 5 can be prevented from being adversely affected.

Furthermore, since the PCS 701 is configured to output the backup control signal (BPCS signal) and the backup commands separately for backup operation, even when a failure occurs to a part of the PCS 701 relevant to generating and outputting the pilot control signal in normal operation or a part of the FCC 2 relevant to those signals, the control by the backup control section 764 can be still available.

Additionally, since the servo calculation process is configured to be carried out by the servo amplifier which is composed of discrete components, the internal structure of the normal control section 562 and that of the backup control section 764 can be made simple.

### Eighth Embodiment

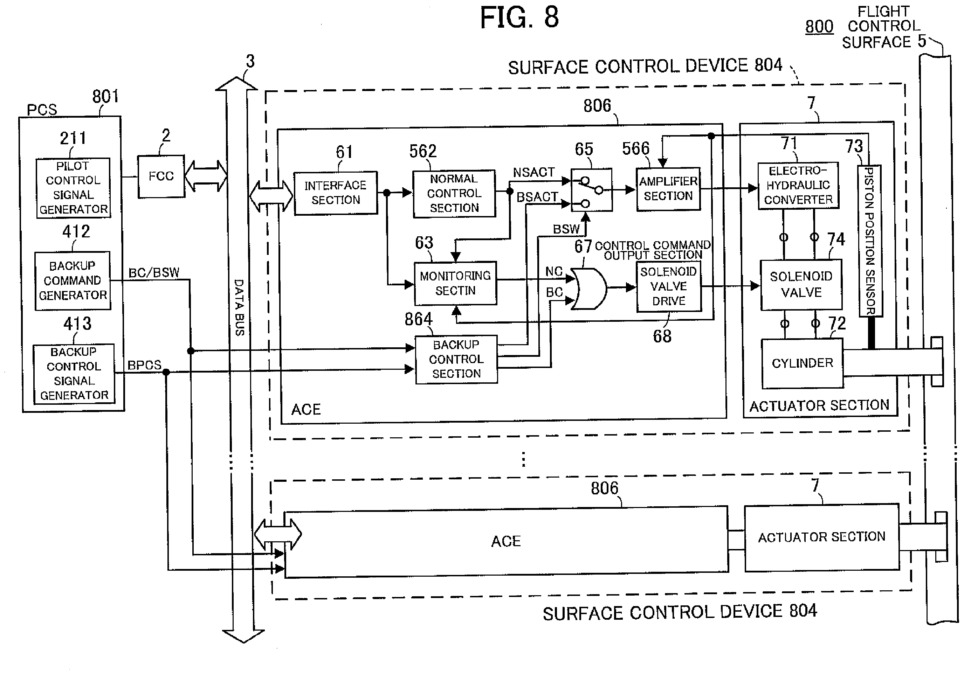

An eighth embodiment of the present invention is a case in which the amplifier section in the fourth embodiment is configured as a servo amplifier, and the surface control signal and the backup commands for backup control operation are separately output from the PCS and fed directly into the backup control section. The configuration of a flight control system according to the eighth embodiment will firstly be described. FIG. 8 is a block diagram schematically showing a flight control system 800 according to the eighth embodiment. For the constituents which are the same as or similar to those of the flight control systems according to the first to seventh embodiments, the same reference numerals and symbols as those of the first to seventh embodiments are given and their detailed descriptions are omitted.

As shown in FIG. 8, the flight control system 800 according to the eighth embodiment is similar to the flight control systems of the first to seventh embodiments, and is composed of a PCS 801, the FCC 2, the data bus 3, a surface control device 804, and the flight control surface 5. The PCS 801 is configured as the same as the PCS 401 in the fourth embodiment and includes, in addition to the pilot control signal generator 211 generating and outputting control operations of the pilot as the normal pilot control signal, the backup command generator 412 outputting the backup commands (BC/BSW command) in response to the operation of the pilot, and the backup control signal generator 413 outputting control operations of the pilot for backup operation as the backup control signal (BPCS signal).

The surface control device 804 is composed of an ACE 806 and the actuator section 7, and a plurality of surface control devices 804 are coupled with a single piece of the flight control surface 5. The ACE 806 includes, similar to the ACE 506 in the fifth embodiment, the interface section 61, the normal control section 562, the monitoring section 63, a backup control section 864, the switching section 65, the amplifier section 566, the control command output section 67, and the solenoid valve driver 68. However, the signal routes fed into the backup control section 864 are different from those of the fifth to seventh embodiments. More specifically, in the backup control section 864, the backup commands output from the backup command generator 412 in the PCS 801 and the BPCS signal output from the backup control signal generator 413 in the PCS 801 are directly fed to the backup control section 864. Other signal routes are the same as those of the fifth embodiment.

Next, their functions will be described primarily on the differences from those of the fifth to seventh embodiments. When the pilot switches to control the flight control surface via the backup control section 864, for example, by recognizing an abnormality of operation in the normal control section 562 of the ACE 806, the PCS 801 outputs the backup commands that are the BSW command and the BC command directly into the backup control section 864 in the ACE 806. The PCS 801 directly outputs the BPCS signal that is the control signal of the pilot for backup operation to the backup control section 864 in the ACE 806.

The backup control section 864, by carrying out a backup control program with the BPCS signal as a surface control signal in backup control operation, outputs the backup secondary actuator operation signal (BSACT signal) whose values are based on the BPCS signal fed directly from the PCS 801. Further, the backup control section 864 receives the BSW command and the BC command directly from the PCS 801, and converts and outputs them in their appropriate formats. Other functions are the same as those of the fifth to seventh embodiments and thus their descriptions are omitted.

Now, the operations of the system will be described primarily on the differences from those of the fifth to seventh embodiments.

### A. Normal Control Operation

The operation in normal control operation is the same as that of the fifth embodiment, and thus its redundant description is omitted. Accordingly, the angle of the flight control surface 5 is controlled by the normal control section 562 based on the surface control signal transmitted from the FCC 2.

### B. Backup Control Operation

In the normal control operation, when it is judged by the monitoring section 63 that the operation of either one of or the both of the normal control section 562 and the actuator section 7 is not normal, the NC command output from the monitoring section 63 is set to 'off'. In this case, since the BC command is 'off', the control command output from the control command output section 67 is switched to 'off', thereby making the solenoid valve 74 in the non-excited state. Consequently, the hydraulic oil is not flowed into the cylinder 72 and the control of the flight control surface 5 is temporarily suspended.

In the PCS 801, when the control operation is switched to control the flight control surface via the backup control section 864 by the operation of the pilot, the PCS 801 outputs the backup commands. In this case, the backup commands are output when it is judged by the FCC 2, based on the normal control section monitoring result and the actuator section monitoring result transmitted from the monitoring section 63, that the operation of the normal control section 562 is abnormal while the operation of the actuator section 7 is normal. The backup commands that are the BC command and the BSW command are fed directly to the backup control section 464 and are output as the BC command and the BSW command in their appropriate formats. The BPCS signal is also fed directly to the backup control section 864 in the ACE 806 and the BACT signal is obtained.

The BC command is fed into the second input terminal of the control command output section 67 and thus the control command that is the output of the control command output section 67 returns to the 'on' state. Accordingly, the solenoid valve 74 is excited again and the flow passage of the hydraulic oil to the drain is resumed to be in the closed state, thereby enabling the control of the flight control surface 5. The BSW command switches the switching section 65 such that the BSACT signal is being fed into the amplifier section 566, i.e. the servo amplifier. Consequently, the angle of the flight control surface 5 is controlled by the backup control section 864 based on the BPCS signal transmitted directly from the PCS 801 to the backup control section 864.

### C. Control Cancel Operation

In the PCS 801, when it is judged by the FCC 2, based on the normal control section monitoring result and the actuator section monitoring result transmitted from the monitoring section 63 via the data bus 3, that the operations of both the normal control section 562 and the actuator section 7 or the operation of the actuator section 7 is abnormal, the PCS 801 does not set the BC command and the BSW command to 'on'. In this case, since the NC command output from the monitoring section 63 is 'off', the output of the control command output section 67 remains to be in 'off' state holding the solenoid valve 74 in the non-excited state. Consequently, the corresponding ACE 806 and the actuator section 7 coupled with that ACE 806 remain in the state where the control of the flight control surface 5 is being halted. The corresponding flight control surface 5 is to be controlled by the other ACE 806 and actuator section 7 pairs, i.e. other surface control devices 804, arranged for that flight control surface 5.

As described in the foregoing, in the present embodiment, when a failure should ever occur to the normal control section 562, as long as the actuator section 7 operates properly, the control of the flight control surface 5 can be promptly switched to the control by the backup control section 864. When it is judged that the operation of the actuator section 7 is faulty, the control of the flight control surface 5 by the corresponding ACE 806 is being halted, and thus the control operation of other ACEs 806, i.e. other surface control devices 804, arranged for that flight control surface 5 can be prevented from being adversely affected.

Furthermore, since the PCS 801 is configured to output the backup control signal (BPCS signal) and the backup commands separately for backup operation, even when a failure occurs to a part of the PCS 801 relevant to generating and outputting the pilot control signal in normal operation or a part of the FCC 2 relevant to those signals, the control by the backup control section 864 can be still available.

Additionally, it is exemplified such that the backup commands are output from the PCS 801 in response to the judgment of the FCC 2 based on the monitoring results of the monitoring section 63, it may be configured not to rely on the judgment of the FCC 2. In other words, it may be configured to forcibly output the backup commands. Accordingly, it is still possible to control the control operation by switching to the control via the backup control section 864 even when the FCC 2 is being faulty.

Furthermore, since the servo calculation process is configured to be carried out by the servo amplifier which is composed of discrete components, the internal structure of the normal control section 562 and that of the backup control section 864 can be made simple.

While various systems for switching backup controls in different manners according to the present invention have been exemplified above, it will be appreciated that, for an ordinary person skilled in the art, the present invention can further be applied to a case where the actuator section is configured without a solenoid valve, such as those of small aircrafts.

In the embodiments above, the backup control signal (BPCS), backup actuator operation signal (BACT), and the backup secondary actuator operation signal (BSACT) are described to be available constantly as the signals of the NACT and BACT or NSACT and BSACT used for the subsequent amplifier section 66 or 566, respectively, are switched and selected by the switching section 65. However, those signals may be configured to be present only when the backup control operation is enabled.

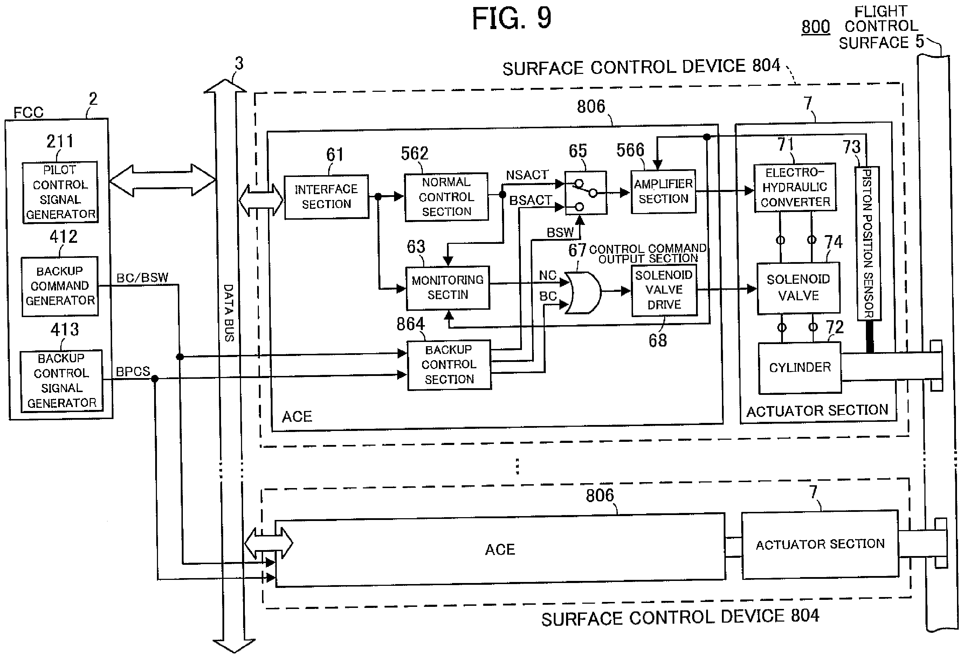

As a further alternative, instead of configuring the PCS 801 and the FCC 2 separately, the FCC 2 can be configured to also function as the PCS 801 by software/hardware implementation. FIG. 9 shows a block diagram of a flight control system of an alternative example based on the eighth embodiment. The functions of the pilot control signal generator 211, backup command generator 412 and backup control signal generator 413 can be software implemented to the software program of the FCC 2. The output of the respective signals can be routed appropriately either via the dedicated terminals of the FCC 2 or via the data bus 3, or a combination of the both. This configuration makes the related circuit simpler and allows saving both space and cost. This can be equally applied not only to the eighth embodiment, but also to the first to seventh embodiments of the present invention.

### Industrial Applicability

According to the present invention, a prompt backup operation can be reinstated even when a malfunction occurs to the FCC or the ACE, and thus the present invention is useful and advantageous as a flight control system.

## Claims

1. A flight control system (100-800) for an aircraft, comprising:
a pilot command system (PCS) (1-801) including a pilot control signal generator (11-811) outputting control operations of a pilot as a pilot control signal;
a flight control computer (FCC) (2) outputting a surface control signal based on said pilot control signal and a sensor signal output from a sensor equipped on said aircraft;
a surface control device (4-804) for controlling a flight control surface (5) of said aircraft, one or more of said surface control devices (4-804) being arranged for a single piece of said flight control surface; and
a data bus (3) for electrically connecting said FCC (2) with said surface control device (4-804),
**characterized in that**
said surface control device (4-804) includes actuator control electronics (ACE) (6-806) outputting an actuator operation signal based on said surface control signal, and an actuator section (7) for driving said flight control surface (5) in response to said actuator operation signal,
said ACE (6-806) includes an interface section (61) for communicating data with said FCC (2) via said data bus (3), a normal control section (62, 562) generating a normal actuator operation signal for controlling said flight control surface (5) based on said surface control signal transmitted from said FCC (2) via said interface section (61), a monitoring section (63) for monitoring whether or not operations of said normal control section (62, 562) and said actuator section (7) are normal and outputting a normal control command when it is judged that said operations of said normal control section (62, 562) and said actuator section (7) are normal, a backup control section (64-864) generating a backup actuator operation signal for controlling said flight control surface (5) in lieu of said normal control section, a switching section (65) for switching between said normal actuator operation signal and said backup actuator operation signal in response to a backup control switching command, an amplifier section (66, 566) for amplifying and outputting one of said normal actuator operation signal and said backup actuator operation signal switched by said switching section (65) as said actuator operation signal, and a control command output section (67) outputting a control command that is a logical addition of said normal control command and a backup control command,
said actuator section (7) includes an electro-hydraulic converter (71) for controlling flow amount of hydraulic oil in response to said actuator operation signal, a cylinder (72) for driving said flight control surface (5) by flow amount of said hydraulic oil controlled by said electro-hydraulic converter, and a solenoid valve (74) for permitting said hydraulic oil to flow into said cylinder (72) when said control command is being output and for blocking said hydraulic oil to flow into said cylinder (72) when said control command is not being output,
said FCC (2) outputs said backup control command and said backup control switching command when it is judged by said FCC (2) based on monitoring results transmitted from said monitoring section (63) that said operation of said normal control section (62, 562) is abnormal and said operation of said actuator section (7) is normal, and
said FCC (2) does not output said backup control command and said backup control switching command when it is judged by the FCC (2) otherwise.

2. A flight control system as set forth in claim 1, wherein said PCS (1-801) further includes a backup control signal generator (213-413) outputting control operations of said pilot as a backup control signal, and a backup command generator (212-412) generating said backup control command and said backup control switching command in response to operations of said pilot in lieu of said FCC (2), and wherein
said backup control command and said backup control switching command are fed into said backup control section (64-864) through said FCC (2), said data bus (3) and said interface section (61), and said backup control signal is fed into said backup control section (64-864) directly.

3. A flight control system as set forth in claim 1, wherein said PCS (1-801) further includes a backup control signal generator (213-413) outputting control operations of said pilot as a backup control signal, and a backup command generator (212-412) generating said backup control command and said backup control switching command in response to operations of said pilot in lieu of said FCC (2), and wherein
said backup control command and said backup control switching command are fed into said backup control section (64-864) directly, and said backup control signal is fed into said backup control section (64-864) through said FCC (2), said data bus (3) and said interface section (61).

4. A flight control system as set forth in claim 1, wherein said PCS (1-801) further includes a backup control signal generator (213-413) outputting control operations of said pilot as a backup control signal, and a backup command generator (212-412) generating said backup control command and said backup control switching command in response to operations of said pilot in lieu of said FCC (2), and wherein
said backup control command and said backup control switching command are fed into said backup control section (64-864) directly, and said backup control signal is fed into said backup control section (64-864) directly.

5. A flight control system as set forth is claim 1, wherein the amplifier is a servo calculator (566) for carrying out servo calculation based on said normal actuator operation signal and said backup actuator operation signal switched by said switching section (65) and outputting calculation results as said actuator operation signal

6. A flight control system as set forth in claim 5, wherein said PCS (1-801) further includes a backup control signal generator (213-413) outputting control operations of said pilot as a backup control signal, and a backup command generator (212-412) generating said backup control command and said backup control switching command in response to operations of said pilot in lieu of said FCC (2), and wherein
said backup control command and said backup control switching command are fed into said backup control section (64-864) through said FCC (2), said data bus (3) and said interface section (61), and said backup control signal is fed into said backup control section (64-864) directly.

7. A flight control system as set forth in claim 5, wherein said PCS (1-801) further includes a backup control signal generator (213-413) outputting control operations of said pilot as a backup control signal, and a backup command generator (212-412) generating said backup control command and said backup control switching command in response to operations of said pilot in lieu of said FCC (2), and wherein
said backup control command and said backup control switching command are fed into said backup control section (64-864) directly, and said backup control signal is fed into said backup control section (64-864) through said FCC (2), said data bus (3) and said interface section (61).

8. A flight control system as set forth in claim 5, wherein said PCS (1-801) further includes a backup control signal generator (213-413) outputting control operations of said pilot as a backup control signal, and a backup command generator (212-412) generating said backup control command and said backup control switching command in response to operations of said pilot in lieu of said FCC (2), and wherein
said backup control command and said backup control switching command are fed into said backup control section (64-864) directly, and said backup control signal is fed into said backup control section (64-864) directly.

9. A flight control system as set forth in any one of claims 1 to 8, wherein said normal control section (62, 562) is composed of a first programmable logic device for executing a normal control program, said monitoring section (63) is composed of a second programmable logic device for executing a monitoring program including a predetermined portion of said normal control program, and said backup control section (64-864) is composed of a third programmable logic device for executing a backup control program having a hardware configuration different from those of said first programmable logic device and said second programmable logic device.

10. A flight control system as set forth in claim 9, wherein said first programmable logic device and said second programmable logic device are field programmable gate arrays (FPGA) having a maximum gate size of 300,000 to 1,000,000 gates, and said third programmable logic device is a complex programmable logic device (CPLD) having a maximum gate size of 100,000 gates.

## Patentansprüche

1. Flugsteuerungssystem (100-800) für ein Flugzeug, umfassend:
ein Pilotenbefehlssystem (PCS) (1-801), umfassend einen Pilotensteuersignalgenerator (11-811), der Steuervorgänge eines Piloten als ein Pilotensteuersignal ausgibt;
einen Flugsteuerungscomputer (FCC) (2), der ein Flächensteuersignal auf Basis des Pilotensteuersignals und einer Sensorsignalausgabe von einem Sensor, mit dem das Flugzeug ausgerüstet ist, ausgibt;
eine Flächensteuerungsvorrichtung (4-804) zum Steuern einer Flugzeugsteuerfläche (5) des Flugzeugs, wobei eine oder mehrere Flächensteuerungsvorrichtungen (4-804) für einen einzelnen Teil der Flugsteuerfläche angeordnet sind; und
einen Datenbus (3) zum elektrischen Verbinden der FCC (2) mit der Flächensteuerungsvorrichtung (4-804),
**dadurch gekennzeichnet, dass**
die Flächensteuerungsvorrichtung (4-804) eine Aktuatorsteuerelektronik (ACE) (6-806) aufweist, die ein Aktuatorbetätigungssignal auf Basis des Flächensteuersignals ausgibt, und einen Aktuatorabschnitt (7) zum Betätigen der Flugzeugsteuerfläche (5) als Antwort auf das Aktuatorbetätigungssignal ausgibt,
die ACE (6-806) einen Schnittstellenabschnitt (61) zum Kommunizieren von Daten mit dem (FCC) (2) über den Datenbus (3) aufweist, einen normalen Steuerungsabschnitt (62, 562), der ein normales Aktuatorbetätigungssignal zum Steuern der Flugzeugsteuerfläche (5) auf Basis des vom (FCC) (2) über den Schnittstellenabschnitt (61) übertragenen Flächensteuersignals aufweist, einen Überwachungsabschnitt (63) zum Überwachen, ob Vorgänge des normalen Steuerungsabschnitts (62, 562) und des Aktuatorabschnitts (7) normal ablaufen oder nicht, aufweist, und einen normalen Steuerbefehl ausgibt, wenn beurteilt wird, dass die Vorgänge des normalen Steuerabschnitts (62, 562) und des Aktuatorabschnitts (7) normal ablaufen, einen Sicherungssteuerabschnitt (64-864) aufweist, der ein Sicherungsaktuatorbetätigungssignal für das Steuern der Flugzeugsteuerfläche (5) anstelle des normalen Steuerabschnitts erzeugt, einen Schaltabschnitt (65) zum Umschalten zwischen dem normalen Aktuatorbetätigungssignal und dem Sicherungsaktuatorbetätigungssignal als Antwort auf einen Sicherungssteuerungsumschaltbefehl aufweist, einen Verstärkerabschnitt (66, 566) für Verstärken und Ausgabe eines von geschaltetem normalem Aktuatorbetätigungssignals und Sicherungsaktuatorbetätigungssignals als vom Schaltabschnitt (65) geschaltetes Aktuatorbetätigungssignal aufweist, und einen Steuerungsbefehlausgabeabschnitt (67) aufweist, der einen Steuerungsbefehl, der eine logische Addition des normalen Steuerungsbefehls und eines Sicherungssteuerungsbefehls ist, ausgibt,
wobei der Aktuatorabschnitt (7) einen elektrohydraulischen Wandler (71) zum Steuern der Durchflussmenge von Hydrauliköl in Abhängigkeit vom Aktuatorbetätigungssignal umfasst, einen Zylinder (72) zum Antreiben der Flugzeugsteuerfläche (5) durch den vom elektrohydraulischen Wandler gesteuerten Hydrauliköldurchfluss, und ein Magnetventil (74) zur Freigabe des Hydrauliköls zum Strömen in den Zylinder (72), wenn der Steuerungsbefehl ausgegeben wird, und zum Sperren des Hydrauliköls gegen Strömen in den Zylinder (72), wenn der Steuerungsbefehl nicht ausgegeben wird,
wobei der (FCC) (2) den Sicherungssteuerungsbefehl und den Sicherungssteuerungsumschaltbefehl ausgibt, wenn der (FCC) (2) auf Basis von vom Überwachungsabschnitt (63) übertragenen Überwachungsergebnissen befindet, das der Betrieb des normalen Steuerungsabschnitts (62, 562) unnormal und der Betrieb des Aktuatorabschnitts (7) normal ist, und
der (FCC) (2) den Sicherungssteuerungsbefehl und den Sicherungssteuerungsumschaltbefehl nicht ausgibt, wenn der (FCC) (2) anders befindet.

2. Flugsteuerungssystem nach Anspruch 1, wobei das (PCS) (1-801) ferner einen Sicherungssteuersignalgenerator (213-413) aufweist, der Steuervorgänge des Piloten als ein Sicherungssteuersignal ausgibt, und einen Sicherungsbefehlsgenerator (212-412) zum Erzeugen des Sicherungssteuerungsbefehls und des Sicherungssteuerungsumschaltbefehls als Reaktion auf Vorgänge durch den Piloten anstelle des (FCC) (2) ausgibt, und wobei
der Sicherungssteuerungsbefehl und der Sicherungssteuerungsumschaltbefehl in den Sicherungssteuerungsabschnitt (64-864) durch den (FCC) (2), den Datenbus (3) und den Schnittstellenabschnitt (61) eingegeben und das Sicherungsbefehlssignal direkt in den Sicherungssteuerungsabschnitt (64-864) eingegeben wird.

3. Flugsteuerungssystem nach Anspruch 1, wobei das (PCS) (1-801) ferner einen Sicherungssteuersignalgenerator (213-413) aufweist, der Steuervorgänge des Piloten als ein Sicherungssteuersignal ausgibt, und einen Sicherungsbefehlsgenerator (212-412) zum Erzeugen des Sicherungssteuerungsbefehls und des Sicherungssteuerungsumschaltbefehls als Reaktion auf Vorgänge durch den Piloten anstelle des (FCC) (2), und wobei
der Sicherungssteuerungsbefehl und der Sicherungssteuerungsumschaltbefehl direkt in den Sicherungssteuerungsabschnitt (64-864) eingegeben werden, und das Sicherungssteuersignal durch den (FCC) (2), den Datenbus (3) und den Schnittstellenabschnitt (61) in den Sicherungssteuerungsabschnitt (64-864) eingegeben wird.

4. Flugsteuerungssystem nach Anspruch 1, wobei das (PCS) (1-801) ferner einen Sicherungssteuersignalgenerator (213-413) aufweist, der Steuervorgänge des Piloten als ein Sicherungssteuersignal ausgibt, und einen Sicherungsbefehlsgenerator (212-412) zum Erzeugen des Sicherungssteuerungsbefehls und des Sicherungssteuerungsumschaltbefehls als Reaktion auf Vorgänge durch den Piloten anstelle des (FCC) (2), und wobei
der Sicherungssteuerungsbefehl und der Sicherungssteuerungsumschaltbefehl direkt in den Sicherungssteuerungsabschnitt (64-864) eingegeben werden und das Sicherungssteuersignal direkt in den Sicherungssteuerungsabschnitt (64-864) eingegeben wird.

5. Flugsteuerungssystem nach Anspruch 1, wobei der Verstärker ein Servorechner (566) zum Ausführen von Servoberechnung auf Basis des normalen Aktuatorbetätigungssignals und des vom Schaltabschnitt (65) geschalteten Sicherungsaktuatorbetätigungssignals und zum Ausgeben der Berechnungsergebnisse als das Aktuatorbetätigungssignal ist.

6. Flugsteuerungssystem nach Anspruch 5, wobei das (PCS) (1-801) ferner einen Sicherungssteuersignalgenerator (213-413) aufweist, der Steuervorgänge des Piloten als ein Sicherungssteuersignal ausgibt, und einen Sicherungsbefehlsgenerator (212-412) zum Erzeugen des Sicherungssteuerungsbefehls und des Sicherungssteuerungsumschaltbefehls als Reaktion auf Vorgänge durch den Piloten anstelle des (FCC) (2), und wobei
der Sicherungssteuerungsbefehl und der Sicherungssteuerungsumschaltbefehl durch den (FCC) (2), den Datenbus (3) und den Schnittstellenabschnitt (61) in den Sicherungssteuerungsabschnitt (64-864) eingegeben werden und das Sicherungssteuersignal direkt in den Sicherungssteuerungsabschnitt (64-864) eingegeben wird.

7. Flugsteuerungssystem nach Anspruch 5, wobei das (PCS) (1-801) ferner einen Sicherungssteuersignalgenerator (213-413) aufweist, der Steuervorgänge des Piloten als ein Sicherungssteuersignal ausgibt, und einen Sicherungsbefehlsgenerator (212-412) zum Erzeugen des Sicherungssteuerungsbefehls und des Sicherungssteuerungsumschaltbefehls als Reaktion auf Vorgänge durch den Piloten anstelle des (FCC) (2), und wobei
der Sicherungssteuerungsbefehl und der Sicherungssteuerungsumschaltbefehl direkt in den Sicherungssteuerungsabschnitt (64-864) eingegeben werden und das Sicherungssteuersignal in den Sicherungssteuerungsabschnitt (64-864) durch den (FCC) (2), den Datenbus (3) und den Schnittstellenabschnitt (61) eingegeben wird.

8. Flugsteuerungssystem nach Anspruch 5, wobei das (PCS) (1-801) ferner einen Sicherungssteuersignalgenerator (213-413) aufweist, der Steuervorgänge des Piloten als ein Sicherungssteuersignal ausgibt, und einen Sicherungsbefehlsgenerator (212-412) zum Erzeugen des Sicherungssteuerungsbefehls und des Sicherungssteuerungsumschaltbefehls als Reaktion auf Vorgänge durch den Piloten anstelle des (FCC) (2), und wobei
der Sicherungssteuerungsbefehl und der Sicherungssteuerungsumschaltbefehl direkt in den Sicherungssteuerungsabschnitt (64-864) eingegeben werden und das Sicherungssteuersignal direkt in den Sicherungssteuerungsabschnitt (64-864) eingegeben wird.

9. Flugsteuerungssystem nach einem der Ansprüche 1 bis 8, wobei der normale Steuerungsabschnitt (62, 562) aus einer ersten programmierbaren Logikvorrichtung zum Ausführen eines normalen Steuerprogramms besteht, wobei der Überwachungsabschnitt (63) aus einer zweiten programmierbaren Logikvorrichtung zum Ausführen eines Überwachungsprogramms einschließlich eines vorgegebenen Teils des normalen Steuerprogramms besteht, und wobei der Sicherungssteuerungsabschnitt (64-864) aus einer dritten programmierbaren Logikvorrichtung zum Ausführen eines Sicherungssteuerungsprogramms besteht, die eine Hardwarekonfiguration aufweist, die sich von der der ersten programmierbaren Logikvorrichtung und der der zweiten programmierbaren Logikvorrichtung unterscheidet.

10. Flugsteuerungssystem nach Anspruch 9, wobei die erste programmierbare Logikvorrichtung und die zweite programmierbare Logikvorrichtung Field Programmable Gate Arrays (FPGA) sind, die eine maximale Gattergröße von 300.000 bis 1.000.000 Gatteräquivalenten haben, und die dritte programmierbare Logikvorrichtung ein Complex Programmable Logic Device (CPLD) mit einer maximalen Gattergröße von 100.000 Gatteräquivalenten ist.

## Revendications

1. Système de commande de vol (100-800) pour un avion, qui comprend :
un système de commande de pilote (PCS) (1-801) qui comprend un générateur de signal de contrôle de pilote (11-811) qui délivre des opérations de contrôle d'un pilote en tant que signal de contrôle de pilote ;
un ordinateur de contrôle de vol (FCC) (2) qui délivre un signal de contrôle de gouverne basé sur ledit signal de contrôle de pilote et sur un signal de capteur délivré par un capteur monté sur ledit avion ;
un dispositif de contrôle de gouverne (4-804) pour contrôler une gouverne de vol (5) dudit avion, dans lequel un ou plusieurs desdits dispositifs de contrôle de gouverne (4-804) sont agencés pour une pièce unique de ladite gouverne de vol ; et
un bus de données (3) pour connecter électriquement ledit FCC (2) audit dispositif de contrôle de gouverne (4-804),
**caractérisé en ce que**
ledit dispositif de contrôle de gouverne (4-804) comprend une électronique de contrôle d'actionneur (ACE) (6-806) qui délivre un signal d'opération d'actionneur basé sur ledit signal de contrôle de gouverne, et une section d'actionneur (7) pour entraîner ladite gouverne de vol (5) en réponse audit signal d'opération d'actionneur,
ladite ACE (6-806) comprend une section d'interface (61) pour échanger des données avec ledit FCC (2) par l'intermédiaire dudit bus de données (3), une section de contrôle normal (62, 562) qui génère un signal d'opération d'actionneur normale pour contrôler ladite gouverne de vol (5) sur la base dudit signal de contrôle de gouverne transmis à partir dudit FCC (2) par l'intermédiaire de ladite section d'interface (61), une section de surveillance (63) pour surveiller si, oui ou non, les opérations de ladite section de contrôle normal (62, 562) et de ladite section d'actionneur (7) sont normales et délivrer une commande de contrôle normal lorsqu'il est jugé que lesdites opérations de ladite section de contrôle normal (62, 562) et de ladite section d'actionneur (7) sont normales, une section de contrôle de secours (64-864) qui génère un signal d'opération d'actionneur de secours pour contrôler ladite gouverne de vol (5) à la place de ladite section de contrôle normal, une section de commutation (65) pour commuter entre ledit signal d'opération d'actionneur normale et ledit signal d'opération d'actionneur de secours en réponse à une commande de commutation de contrôle de secours, une section d'amplificateur (66, 566) pour amplifier et délivrer l'un dudit signal d'opération d'actionneur normale et dudit signal d'opération d'actionneur de secours commutés par ladite section de commutation (65) en tant que dit signal d'opération d'actionneur, et une section de sortie de commande de contrôle (67) qui délivre une commande de contrôle qui est une addition logique de ladite commande de contrôle normal et d'une commande de contrôle de secours,
ladite section d'actionneur (7) comprend un convertisseur électro-hydraulique (71) pour contrôler une quantité d'écoulement d'huile hydraulique en réponse audit signal d'opération d'actionneur, un vérin (72) pour entraîner ladite gouverne de vol (5) avec une quantité d'écoulement de ladite huile hydraulique contrôlée par ledit convertisseur électro-hydraulique, et une électrovanne (74) pour permettre à ladite huile hydraulique de s'écouler dans ledit vérin (72) lorsque ladite commande de contrôle est délivrée et pour empêcher ladite huile hydraulique de s'écouler dans ledit vérin (72) lorsque ladite commande de contrôle n'est pas délivrée,
ledit FCC (2) délivre ladite commande de contrôle de secours et ladite commande de commutation de contrôle de secours lorsqu'il est jugé, par ledit FCC (2), sur la base des résultats de surveillance transmis par ladite section de surveillance (63), que ladite opération de ladite section de contrôle normal (62, 562) est anormale et que ladite opération de ladite section d'actionneur (7) est normale, et
ledit FCC (2) ne délivre pas ladite commande de contrôle de secours et ladite commande de commutation de contrôle de secours lorsque le jugement du FCC (2) est différent.

2. Système de commande de vol selon la revendication 1, dans lequel ledit PCS (1-801) comprend en outre un générateur de signal de contrôle de secours (213-413) qui délivre des opérations de contrôle dudit pilote en tant que signal de contrôle de secours, et un générateur de commande de secours (212-412) qui génère ladite commande de contrôle de secours et ladite commande de commutation de contrôle de secours en réponse aux opérations dudit pilote à la place dudit FCC (2), et dans lequel
ladite commande de contrôle de secours et ladite commande de commutation de contrôle de secours sont fournies à ladite section de contrôle de secours (64-864) par l'intermédiaire dudit FCC (2), dudit bus de données (3) et de ladite section d'interface (61), et ledit signal de contrôle de secours est fourni à ladite section de contrôle de secours (64-864) directement.

3. Système de commande de vol selon la revendication 1, dans lequel ledit PCS (1-801) comprend en outre un générateur de signal de contrôle de secours (213-413) qui délivre des opérations de contrôle dudit pilote en tant que signal de contrôle de secours, et un générateur de commande de secours (212-412) qui génère ladite commande de contrôle de secours et ladite commande de commutation de contrôle de secours en réponse aux opérations dudit pilote à la place dudit FCC (2), et dans lequel
ladite commande de contrôle de secours et ladite commande de commutation de contrôle de secours sont fournies à ladite section de contrôle de secours (64-864) directement, et ledit signal de contrôle de secours est fourni à ladite section de contrôle de secours (64-864) par l'intermédiaire dudit FCC (2), dudit bus de données (3) et de ladite section d'interface (61).

4. Système de commande de vol selon la revendication 1, dans lequel ledit PCS (1-801) comprend en outre un générateur de signal de contrôle de secours (213-413) qui délivre des opérations de contrôle dudit pilote en tant que signal de contrôle de secours, et un générateur de commande de secours (212-412) qui génère ladite commande de contrôle de secours et ladite commande de commutation de contrôle de secours en réponse aux opérations dudit pilote à la place dudit FCC (2), et dans lequel
ladite commande de contrôle de secours et ladite commande de commutation de contrôle de secours sont fournies à ladite section de contrôle de secours (64-864) directement, et ledit signal de contrôle de secours est fourni à ladite section de contrôle de secours (64-864) directement.

5. Système de commande de vol selon la revendication 1, dans lequel l'amplificateur est un calculateur d'asservissement (566) pour exécuter un calcul d'asservissement sur la base dudit signal d'opération d'actionneur normale et dudit signal d'opération d'actionneur de secours commutés par ladite section de commutation (65) et délivrer les résultats de calcul en tant que dit signal d'opération d'actionneur.

6. Système de commande de vol selon la revendication 5, dans lequel ledit PCS (1-801) comprend en outre un générateur de signal de contrôle de secours (213-413) qui délivre des opérations de contrôle dudit pilote en tant que signal de contrôle de secours, et un générateur de commande de secours (212-412) qui génère ladite commande de contrôle de secours et ladite commande de commutation de contrôle de secours en réponse aux opérations dudit pilote à la place dudit FCC (2), et dans lequel
ladite commande de contrôle de secours et ladite commande de commutation de contrôle de secours sont fournies à ladite section de contrôle de secours (64-864) par l'intermédiaire dudit FCC (2), dudit bus de données (3) et de ladite section d'interface (61), et ledit signal de contrôle de secours est fourni à ladite section de contrôle de secours (64-864) directement.

7. Système de commande de vol selon la revendication 5, dans lequel ledit PCS (1-801) comprend en outre un générateur de signal de contrôle de secours (213-413) qui délivre des opérations de contrôle dudit pilote en tant que signal de contrôle de secours, et un générateur de commande de secours (212-412) qui génère ladite commande de contrôle de secours et ladite commande de commutation de contrôle de secours en réponse aux opérations dudit pilote à la place dudit FCC (2), et dans lequel
ladite commande de contrôle de secours et ladite commande de commutation de contrôle de secours sont fournies à ladite section de contrôle de secours (64-864) directement, et ledit signal de contrôle de secours est fourni à ladite section de contrôle de secours (64-864) par l'intermédiaire dudit FCC (2), dudit bus de données (3) et de ladite section d'interface (61).

8. Système de commande de vol selon la revendication 5, dans lequel ledit PCS (1-801) comprend en outre un générateur de signal de contrôle de secours (213-413) qui délivre des opérations de contrôle dudit pilote en tant que signal de contrôle de secours, et un générateur de commande de secours (212-412) qui génère ladite commande de contrôle de secours et ladite commande de commutation de contrôle de secours en réponse aux opérations dudit pilote à la place dudit FCC (2), et dans lequel
ladite commande de contrôle de secours et ladite commande de commutation de contrôle de secours sont fournies à ladite section de contrôle de secours (64-864) directement, et ledit signal de contrôle de secours est fourni à ladite section de contrôle de secours (64-864) directement.

9. Système de commande de vol selon l'une quelconque des revendications 1 à 8, dans lequel ladite section de contrôle normal (62, 562) est composée d'un premier dispositif logique programmable pour exécuter un programme de contrôle normal, ladite section de surveillance (63) est composée d'un deuxième dispositif logique programmable pour exécuter un programme de surveillance qui comprend une partie prédéterminée dudit programme de contrôle normal, et ladite section de contrôle de secours (64-864) est composée d'un troisième dispositif logique programmable pour exécuter un programme de contrôle de secours qui présente une configuration matérielle différente de celles dudit premier dispositif logique programmable et dudit deuxième dispositif logique programmable.

10. Système de commande de vol selon la revendication 9, dans lequel ledit premier dispositif logique programmable et ledit deuxième dispositif logique programmable sont des réseaux de portes programmables sur site (FPGA) qui ont un nombre de portes maximum de 300 000 à 1 000 000 de portes, et ledit troisième dispositif logique programmable est un dispositif logique programmable complexe (CPLD) qui a un nombre de portes maximum de 100 000 portes.
